# EUROPEAN PATENT SPECIFICATION

(11) **EP 1 206 312 B1**
(45) Date of publication and mention of the grant of the patent: **15.10.2008**
(21) Application number: 00955812.3
(22) Date of filing: 22.08.2000
(51) Int. Cl.: B01D 53/94

(54) **CATALYTIC TRAP WITH POTASSIUM COMPONENT AND METHOD OF USING THE SAME**
KALIUM ENTHALTENDE KATALYTISCHE FALLE UND VERFAHREN ZU IHRER HERSTELLUNG UND IHRER VERWENDUNG
PIEGE CATALYTIQUE A COMPOSANT AU POTASSIUM ET PROCEDE D'UTILISATION

(30) Priority: 23.08.1999 US 378813
(43) Date of publication of application: 22.05.2002
(73) Proprietor: BASF Catalysts LLC, Iselin, NJ 08830 (US)
(72) Inventor: DEEBA, MIchel, East Brunswick, NJ 08816 (US); DAHLE, Uwe, D-30826 Garbsen (DE); BRANDT, Stefan, D-38106 Braunschweig (DE); HOCHMUTH, John, K., Bridgewater, NJ 08807 (US)
(74) Representative: Fisher, Adrian John
(86) International application number: PCT/US2000/022968
(87) International publication number: WO 2001/014046

(56) References cited:
- EP-A- 0 664 147
- EP-A- 0 707 882
- EP-A- 0 716 876
- EP-A- 0 982 066
- WO-A-97/02886
- DE-A- 19 617 124

## Description

### BACKGROUND OF THE INVENTION

### Field of the Invention

The present invention relates to a catalytic trap for treating exhaust gas streams, especially those emanating from lean-burn engines, and to methods of using the same. More specifically, the present invention provides a catalytic trap which abates NOₓ in the exhaust streams being treated and exhibits enhanced durability after aging at high temperature and lean operation conditions.

### Related Art

Emission of nitrogen oxides ("NOₓ") from lean-burn engines (described below) must be reduced in order to meet emission regulation standards. Conventional three-way conversion ("TWC") automotive catalysts are suitable for abating NOₓ, carbon monoxide ("CO") and hydrocarbon ("HC") pollutants in the exhaust of engines operated at or near stoichiometric air/fuel conditions. The precise proportion of air to fuel that results in stoichiometric conditions varies with the relative proportions of carbon and hydrogen in the fuel. An air-to-fuel ("A/F") ratio of 14.65:1 (weight of air to weight of fuel) is the stoichiometric ratio corresponding to the combustion of a hydrocarbon fuel, such as gasoline, with an average formula CH_{1.88}. The symbol λ is thus used to represent the result of dividing a particular A/F ratio by the stoichiometric A/F ratio for a given fuel, so that λ = 1 is a stoichiometric mixture, λ > 1 is a fuel-lean mixture and λ < 1 is a fuel-rich mixture.

Engines, especially gasoline-fueled engines to be used for passenger automobiles and the like, are being designed to operate under lean conditions as a fuel economy measure. Such future engines are referred to as "lean-burn engines". That is, the ratio of air to fuel in the combustion mixtures supplied to such engines is maintained considerably above the stoichiometric ratio (e.g., at an air-to-fuel weight ratio of 18:1) so that the resulting exhaust gases are "lean", i.e., the exhaust gases are relatively high in oxygen content. Although lean-burn engines provide enhanced fuel economy, they have the disadvantage that conventional TWC catalysts are not effective for reducing NOₓ emissions from such engines because of excessive oxygen in the exhaust. The prior art discloses attempts to overcome this problem by operating lean-burn engines with brief periods of fuel-rich operation. (Engines which operate in this fashion are sometimes referred to as "partial lean-burn engines".) It is known to treat the exhaust of such engines with a catalyst/NOₓ sorbent which stores NOₓ during periods of lean (oxygen-rich) operation, and releases the stored NOₓ during the rich (fuel-rich) periods of operation. During periods of rich (or stoichiometric) operation, the catalyst component of the catalyst/NOₓ sorbent promotes the reduction of NOₓ to nitrogen by reaction of NOₓ (including NOₓ released from the NOₓ sorbent) with HC, CO and/or hydrogen present in the exhaust.

The use of NOₓ storage (sorbent) components including alkaline earth metal oxides, such as oxides of Ca, Sr and Ba, alkali metal oxides such as oxides of K, Na, Li and Cs, and rare earth metal oxides such as oxides of Ce, La, Pr and Nd in combination with precious metal catalysts such as platinum dispersed on an alumina support, is known, as shown for example, at column 4, lines 19-25, of U.S. Patent 5,473,887 of S. Takeshima et al, issued on December 12, 1995. At column 4, lines 53-57, an exemplary composition is described as containing barium (an alkaline earth metal) and a platinum catalyst. The publication Environmental Catalysts For A Better World And Life, Proceedings of the 1st World Congress at Pisa, Italy, May 1-5, 1995, published by the Societa Chimica Italiana of Rome, Italy has, at pages 45-48 of the publication, an article entitled "The New Concept 3-Way Catalyst For Automotive Lean-Burn Engine Storage and Reduction Catalyst", by Takahashi et al (below referred to as "the Takahashi et al paper"). This article discloses the preparation of catalysts of the type described in the aforementioned Takeshima et al U.S. Patent 5,473,887 and using these catalysts for NOₓ purification of actual and simulated exhaust gases alternately under oxidizing (lean) and reducing (rich or stoichiometric) conditions. The conclusion is drawn in the last sentence on page 46, that NOₓ was stored in the catalyst under oxidizing conditions and that the stored NOₓ was then reduced to nitrogen under stoichiometric and reducing conditions. A similar but more detailed discussion is contained in SAE Paper 950809 published by the Society of Automotive Engineers, Inc., Warrendale, Pa., and entitled Development of New Concept Three-Way Catalyst for Automotive Lean-Burn Engines, by Naoto Miyoshi et al, was delivered at the International Congress and Exposition, Detroit, Mich., Feb. 27-Mar. 2, 1995.

U.S. Patent 4,742,038, "Monolithic Catalyst Support and Catalyst Deposited on the Support", issued May 3, 1988 to S. Matsumoto, discloses a metal substrate for carrying a catalytic material useful for the treatment of exhaust gases from internal combustion engines.

U.S. Patent 5,874,057, "Lean NOₓ Catalyst/Trap Method", issued on February 23, 1999 to M. Deeba et al, discloses a method of NOₓ abatement utilizing a composition comprising a NOₓ abatement catalyst comprising platinum and, optionally, at least one other platinum group metal catalyst which is kept segregated from a NOₓ sorbent material. The NOₓ sorbent material may be one or more of oxides, carbonates, hydroxides and mixed oxides of one or more of lithium, sodium, potassium, rubidium, osmium, magnesium, calcium, strontium and barium.

Prior art catalysts as described above have a problem in practical application, particularly when the catalysts are aged by exposure to high temperatures and lean operating conditions, because after such exposure, such catalysts show a marked decrease in catalytic activity for NOₓ reduction, particularly at low temperature (250 to 350°C) and high temperature (450 to 600°C) operating conditions.

U.S. Patent 5,451,558, "Process For the Reaction and Absorption of Gaseous Air Pollutants, Apparatus Therefor and Method of Making the Same", issued on September 19, 1995 to L. Campbell et al, ("the Campbell et al Patent") discloses a catalytic material for the reduction of NOₓ from a turbine in a power generating stack, although the patent also refers at column 1, lines 13-14, generally to a process and apparatus for reducing pollutants "which are produced by combustion of hydrocarbons or hydrogen in an engine or boiler, and primarily in a gas turbine." As disclosed at column 2, lines 23-37, the turbine exhaust gases are cooled to the range of 250 to 500°F (about 121 to 260°C) before contacting the catalytic/adsorbent material (column 2, lines 23-37) and the oxidation is stated (column 2, lines 45-48) to occur at temperatures in the range of 150 to about 425°F (66 to 218°C), most preferably in the range of 175 to 400°F (about 79 to 204°C). The catalytic species comprises an oxidation catalyst species which may comprise various metals including platinum group metals (see column 3, line 67 through column 4, line 3) deposited on a high surface area support which may be "made of alumina, zirconia, titania, silica or a combination of two or more of these oxides." The catalyst-containing high surface area support is coated with an adsorbent species which may comprise "at least one alkali or alkaline earth compound, which can be a hydroxide compound, bicarbonate compound, or carbonate compound, or mixtures" thereof. At column 3, lines 16-22, the "carbonate coating" is said to be a "lithium, sodium, potassium or calcium carbonate, and presently the preferred coating is a potassium carbonate." At column 4, lines 28-31, however, it is stated that the absorber comprises "most preferably sodium carbonate, potassium carbonate or calcium carbonate."

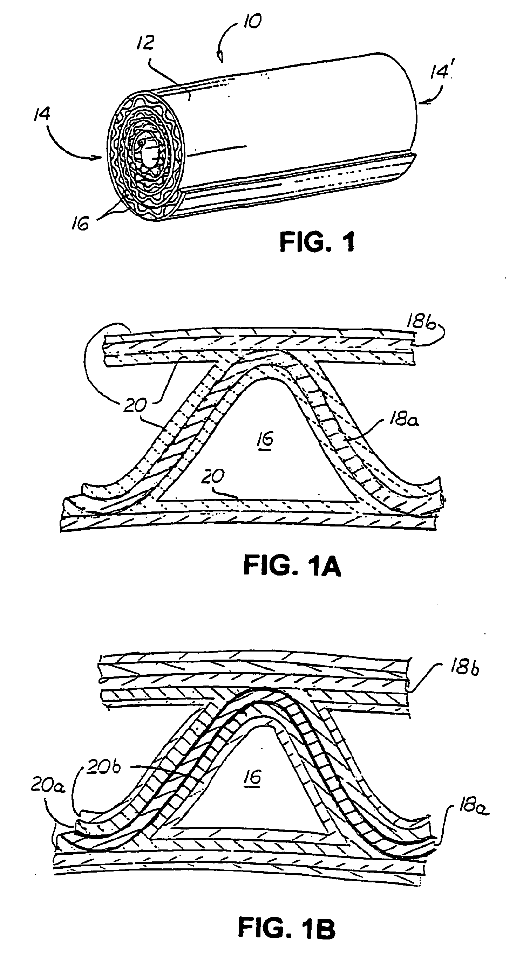

The high surface area support containing the oxidation species and adsorbent may be coated onto "a ceramic or metal matrix structure" as a carrier. See column 4, lines 12-20. The catalytic material is applied to the carrier by coating the carrier with, e.g., platinum-impregnated alumina, and then wetting the alumina with an alkali or alkaline earth carbonate solution, and then drying the wetted alumina (see column 5, line 9 through column 6, line 12). The carrier may be alumina beads as illustrated in Figure 1A, or a monolithic ceramic or stainless steel support as illustrated in Figure 1C, both Figures being described at column 4, line 67, to column 5, line 8. The use of a metal monolith support for the catalytic/adsorbent material is suggested at column 5, lines 48-58. There is no suggestion in the Campbell et al Patent of criticality of, nor is any importance assigned to, the type of substrate or high surface area support to be used with a particular adsorbent species. In fact, as noted above, silica is one of four high surface area supports taught for use with compositions preferably including a potassium carbonate adsorbent.

EP 0 716 876 A describes a catalyst for purifying exhaust gases. The catalyst is composed of a catalyst substrate, a first porous support layer supporting barium as a NOₓ-occluding material and palladium, which is formed on the catalyst support, and a second porous support layer supporting platinum, which is formed on the first porous support layer.

EP 0 707 882 A describes an automotive exhaust catalyst that includes a support, which is less likely to adsorb SOₓ contained in an exhaust gas and a NOₓ storage compound loaded on the support, and a noble metal element loaded on the support. The support is an alumina support with a Ti-Zr composite oxide loaded thereon, or is formed of a Ti-Zr or Ti-Zr-Y composite oxide. The composite oxide inhibits the NOₓ storage compound, which is selected from alkali metals, alkaline-earth metals and rare-earth elements, from being poisoned by sulfur.

EP 0 664 147 A describes a catalyst for purifying exhaust gases which aims to efficiently purify NOₓ in exhaust gases in oxygen-rich atmospheres. The catalyst comprises a first catalyst in which a noble metal catalyst is loaded on a porous acidic support, a second catalyst in which at least are kind of metal selected from the group consisting of alkali metals, alkaline-earth metals and rare earth metals is loaded on a porous support, and a third catalyst in which a noble metal catalyst is loaded on a porous support.

EP 0 982 066 A describes a nitrogen storage material containing a least one storage component for nitrogen oxides in the form of particles of an oxide, carbonate or hydroxide of alkaline-earth metals magnesium, calcium, strontium and barium and of alkali metals potassium and caesium on a defined support material.

### SUMMARY OF THE INVENTION

The present invention is set out in claim 1. Preferred features are set out in dependent claims 2 to 29.

Generally, the present invention relates to a catalytic trap member having coated thereon a catalytic trap material comprising a catalytic component effective for the reduction of NOₓ and a NOₓ sorbent essentially comprising a basic oxygenated, preferably, potassium compound, the catalytic material being coated onto a carrier member which is inert to the basic oxygenated, preferably, potassium compound.

Specifically, in accordance with the present invention there is provided a catalytic trap for conversion of NOₓ in an exhaust gas stream which is periodically alternated between (1) lean and (2) stoichiometric or rich conditions, the catalytic trap comprising the following components: (a) a catalytic trap material which comprises (i) a refractory metal oxide support having dispersed thereon a catalytic component effective for promoting the reduction of NOₓ under stoichiometric or rich conditions of the exhaust stream, and (ii) a NOₓ sorbent effective for adsorbing NOₓ under lean conditions of the exhaust gas stream and desorbing NOₓ under stoichiometric or rich conditions of the exhaust gas stream and comprising one or more basic oxygenated compounds of an alkali metal selected from the group consisting of lithium, sodium and potassium, the catalytic trap material being inert to the aforesaid basic oxygenated compounds, and (b) a refractory carrier member which is inert to the aforesaid basic oxygenated compounds and on which the catalytic trap material is coated.

The refractory carrier member is selected from the group consisting of (a) refractory metal, e.g., stainless steel, Fecralloy or titanium, and (b) the refractory oxides: alumina, titania, zirconia, zirconia-alumina, zirconia-titania, titania-alumina, lanthana-alumina, baria-zirconia-alumina, niobia-alumina, and silica-leached cordierite.

The catalytic trap for the above-described purpose comprises the following components: (a) a catalytic trap material which is substantially free of silica components and comprises (i) a refractory metal oxide support having dispersed thereon a catalytic component effective for promoting the reduction of NOₓ under stoichiometric or rich conditions of the exhaust stream, and (ii) a NOₓ sorbent effective for adsorbing NOₓ under lean conditions of the exhaust gas stream and desorbing NOₓ under stoichiometric or rich conditions of the exhaust gas stream, the NOₓ sorbent comprising one or more basic oxygenated compounds of an alkali metal selected from the group consisting of lithium, sodium and potassium; and (b) a refractory carrier member on which the catalytic trap material is coated, the carrier member being selected from the group consisting of a refractory metal, alumina, titania, zirconia, zirconia-alumina, titania-zirconia, titania-alumina, lanthana-alumina, baria-zirconia-alumina, niobia-alumina, and silica-leached cordierite.

The catalytic trap for the above-described purpose can comprise the following components: (a) a catalytic trap material comprising (i) a refractory metal oxide support having dispersed thereon a catalytic component effective for promoting the reduction of NOₓ under stoichiometric or rich conditions of the exhaust stream, and (ii) a NOₓ sorbent effective for adsorbing NOₓ under lean conditions of the exhaust gas stream and desorbing NOₓ under stoichiometric or rich conditions of the exhaust gas stream, the NOₓ sorbent comprising one or more basic oxygenated compounds of an alkali metal selected from the group consisting of lithium, sodium and potassium present in an amount sufficient to provide, after reaction with the aforesaid basic oxygenated compounds of all silica components present in the catalytic trap, an excess of the basic oxygenated compounds of at least 0.0061 g/cm³ (0.1 g/in³), e.g., an excess of from 0.0061 to 0.152 g/cm³ (0.1 to 2.5 g/in³) of the basic oxygenated compounds, calculated as M₂O, where M = Li, Na or K; and (b) a refractory carrier member on which the catalytic trap material is coated.

Preferably, the alkali metal comprises potassium, so that the basic oxygenated compound is a basic oxygenated compound of potassium.

The catalytic trap comprises a refractory carrier member which is inert to the aforesaid basic oxygenated compounds, e.g., a refractory carrier member which is inert to basic oxygenated compounds of potassium, on which can be coated a catalytic trap material which is substantially free of silica components. The catalytic trap material can comprise a discrete, first layer of catalytic trap material and a discrete, second layer of catalytic trap material overlying the first layer.

The first layer can comprise a first NOₓ sorbent comprising a first potassium oxygenated compound and a first catalytic component, and the second layer comprises a second NOₓ sorbent comprising a second potassium oxygenated compound and a second catalytic component.

The catalytic component is optionally selected from the group consisting of one or more of palladium, platinum and rhodium catalytic components.

For example, one aspect of the layered embodiment of the invention provides for the first catalytic component to comprise a platinum catalytic component and the second catalytic component to comprise a platinum catalytic component, a rhodium catalytic component and a palladium catalytic component.

In another aspect of the layered embodiment of the present invention, (a) the first catalytic component comprises a platinum catalytic component and the first layer further comprises lanthanum, barium and zirconium components, and (b) the second catalytic component comprises a platinum catalytic component, a palladium catalytic component and a rhodium catalytic component, and the second layer further comprises barium and zirconium components.

The present invention provides for the carrier member to comprise a refractory material which is substantially free of silica components. For example, the carrier member may comprise a refractory metal, e.g., stainless steel, titanium or Fecralloy, or refractory metal oxides, including ceramic-like materials, e.g., alumina, titania, zirconia or silica-leached cordierite. Generally, the refractory metal may be any suitable refractory metal or alloy or refractory oxide or mixed oxide material which is inert to basic oxygenated compounds of one or more of lithium, sodium, and potassium. The carrier member may also comprise a combination of two or more of these materials, e.g., alumina and titania.

The NOₓ sorbent may further comprise one or more basic oxygenated compounds of one or more metals selected from the group consisting of (a) alkali metals other than lithium, sodium or potassium, (b) alkaline earth metals and (c) rare earth metals, although the latter are not preferred. For example, the NOₓ sorbent may further comprise one or more basic oxygenated compounds of one or more metals selected from the group consisting of magnesium, calcium, barium, strontium, and cesium.

The present invention provides for the carrier member of the catalytic trap to have a longitudinal axis, a front face and a rear face, and a plurality of parallel gas-flow passages extending longitudinally therethrough and connecting the front and rear faces of the carrier member. The gas-flow passages are defined by walls on which the catalytic NOₓ sorbent is coated, and the NOₓ sorbent comprises one or more basic oxygenated compounds of preferably, potassium disposed only in a first longitudinal segment of the carrier member, that is, between one of the rear and front faces of the carrier member and an intermediate point along the longitudinal axis thereof. (The distance from the front face of the carrier to the intermediate point may comprise from about 20 percent to 80 percent of the length of the carrier along its longitudinal axis.) In this way, the basic oxygenated compound or compounds of lithium, sodium or potassium, e.g., the basic oxygenated compounds of potassium, are excluded from a second longitudinal segment of the carrier member lying between either the front or the rear face of the carrier member and the said intermediate point.

The present invention can provide the catalytic trap in combination with a treatment catalyst disposed upstream of the catalytic trap relative to the exhaust gas stream, the treatment catalyst being effective at least to promote under oxidation conditions the oxidation of hydrocarbons to CO₂ and H₂O.

A method aspect of the present invention provides a method of treating an exhaust gas stream containing NOₓ to abate the NOₓ content of the stream. The method comprises maintaining the stream under alternating periods of (1) lean and (2) stoichiometric or rich operation and contacting the stream during the periods of both lean and stoichiometric or rich operation with a catalytic trap material as described above at conditions whereby at least some of the NOₓ in the exhaust gas stream is adsorbed by the catalytic trap material during the periods of lean operation and is released from the catalytic trap material and reduced to nitrogen during the periods of stoichiometric or rich operation. Contact temperatures may be from about 200°C to 650°C, e.g., about 350°C to 650°C. (During stoichiometric or rich conditions, however, the catalytic trap may be exposed to higher temperatures, on the order of about 650°C to 850°C.)

Another method aspect of the present invention provides that the exhaust gas stream contains hydrocarbons and the method further comprises contacting the exhaust gas stream under oxidizing conditions with a catalyst effective to promote oxidation of hydrocarbons, whereby to oxidize hydrocarbons contained therein, prior to contacting the exhaust gas stream with the catalytic trap.

Other features of the present invention are set forth in the appended drawings and in the detailed description set forth below.

Reference herein and in the claims to a "carrier" (sometimes referred to as a "carrier member" or "carrier substrate") or other material which is "inert" to the basic oxygenated compounds of one or more of lithium, sodium and potassium means a carrier or material which is substantially inert to reaction with such basic oxygenated compounds under the conditions encountered by aging or utilization of the catalytic traps of the present invention, including fuel-cut aging cycles at temperatures up to about 900°C. (The term "fuel-cut aging" is explained below.) Such reaction would render the NOₓ sorbent (the aforesaid basic oxygenated compound or compounds) significantly less effective in fulfilling its role in NOₓ reduction. Similarly, reference herein and in the claims to a carrier which is "potassium-inert" means a carrier which is substantially inert to reaction under the described conditions with basic oxygenated compounds of potassium.

As used herein and in the claims, an "oxygenated metal compound" means a compound including one or more metals and oxygen. For example, the aforesaid basic oxygenated metal compounds may comprise one or more of a metal oxide, a metal carbonate and a metal hydroxide.

Reference herein and in the claims to "component" or "components" with reference to catalytic components such as palladium, platinum or rhodium catalytic components means the metal or metals, as the element, alloy or compound, in catalytically effective form, e.g., usually as the element or an alloy. Similarly, reference herein and in the claims to metal "components" comprising NOₓ sorbents means any effective NOₓ trapping forms of the metals, e.g., oxygenated metal compounds such as metal hydroxides, mixed metal oxides, metal oxides or metal carbonates.

The quantities of components of the catalytic material are expressed herein in units of weight per unit volume, specifically, grams per cubic centimeter ("g/cm³") and grams per cubic meter ("g/m³") (grams per cubic inch ("g/in³") and grams per cubic foot ("g/ft³")). This system of nomenclature accommodates voids in a carrier member such as the carrier member having a plurality of parallel, fine gas-flow passages expending therethrough, on the walls of which the catalytic NOₓ sorbent is coated. The nomenclature would similarly accommodate the voids contained in an embodiment wherein the catalytic NOₓ sorbent is coated onto beads of a catalytically inert material, the inert beads and the interstices between them providing voids in the catalytic trap. Concentrations ("loadings") in the trap member of catalytic metals such as Pd, Rh and Pt are given on the basis of the elemental metal and are expressed as, e.g., 7.063 kg/m³ (200 g/ft³) Pd, 5.5 g/cm³ (90 g/in³) Pt, etc. Loadings of NOₓ sorbents are similarly given on a weight per volume basis, but as grams par cubic centimeter ("g/cm³), (grams per cubic inch ("g/in³")), and calculated on the basis of the following oxides: Li₂O, Na₂O, K₂O, and, as appropriate, Cs₂O, MgO, CaO, SrO and BaO. The coating of the catalytic NOₓ sorbent on the carrier member is sometimes referred to as a "washcoat" because the carrier member is typically coated with an aqueous slurry of particles of the solids, e.g., the refractory metal the oxide support, and the slurry coating is then dried and heated (calcined) to provide the washcoat.

Reference herein and in the claims to the use of "dispersions" or the like of precursor compounds in a liquid includes the use of solutions or other dispersions in a liquid vehicle of precursor compounds and/or complexes.

Reference herein to a mixed metal oxide means an oxide which contains two or more metals, such as barium zirconate, barium titanate, barium aluminate, etc.

As used herein and in the claims, reference to "silica components" means and includes silica and silicates; reference to a material being "substantially free" of silica components means that the quantity of silica components present, if any, is too little to noticeably adversely affect the efficacy of the catalytic trap material.

### BRIEF DESCRIPTION OF THE DRAWINGS

Figure 1 is a perspective view of a catalytic trap comprising a metallic honeycomb-type refractory carrier member in accordance with one embodiment of the present invention;
Figure 1A is a partial cross-sectional view enlarged relative to Figure 1 and taken along a plane parallel to the end faces of the carrier member of Figure 1;
Figure 1B is a view corresponding to Figure 1A of another embodiment of the present invention;
Figure 2 is a perspective view of a catalytic trap comprising a ceramic-like honeycomb-type carrier member in accordance with a third embodiment of the present invention;
Figure 2A is a partial cross-sectional view enlarged relative to Figure 2 and taken along a plane parallel to the end faces of the carrier member of Figure 2;
Figure 2B is a view, enlarged relative to Figure 2A, of a gas-flow passage of the type shown in Figure 2A, but showing another embodiment of the present invention;
Figures 3A and 3B are schematic representations of two steps in the manufacture of a catalytic trap in accordance with a specific embodiment of the present invention;
Figure 4 is a schematic representation of a two-piece catalytic trap in accordance with an embodiment of the present invention;
Figure 5 is a schematic representation of a treatment system for an engine exhaust comprising an optional pretreatment catalyst disposed upstream of a catalytic trap in accordance with the present invention;
Figure 6 shows plots of "NOₓ conversion curves" obtained by plotting on the vertical axis the percent of NOₓ in the inlet stream to the test catalytic trap member which is converted to N₂ by being contacted with the catalytic trap member after aging, and on the horizontal axis the inlet temperature in degrees centigrade of the inlet stream immediately prior to its entering the catalytic trap;
Figures 7 and 8 show plots of NOₓ adsorption capacities over a range of reactor inlet temperatures for catalytic trap members in accordance with embodiments of the present invention and comparative catalytic trap members; and
Figures 9 and 10 show plots of NOₓ conversion over a range of reactor inlet temperatures for catalytic trap members in accordance with embodiments of the present invention and comparative catalytic trap members.

### DETAILED DESCRIPTION OF THE INVENTION AND SPECIFIC EMBODIMENTS THEREOF

The reduction of NOₓ from the exhaust of lean-burn engines, such as gasoline direct injection and partial lean-burn engines, as well as from diesel engines, requires trapping of NOₓ at lean engine operating conditions and releasing and reducing the NOₓ at stoichiometric or rich engine operating conditions. The lean operating cycle is typically between 1 to 3 minutes and the rich operating cycle should be small enough (1 to 5 seconds) to preserve as much as possible of the fuel benefit associated with lean-burn engines.

After lean aging at temperatures above 750° C, known catalytic traps show severe deactivation and loss in overall NOₓ conversion. The symptoms associated with such catalytic trap deactivation are:
(1) Loss in low temperature oxidation activity, i.e., the loss in efficiency of oxidation of NO to NO₂, which results in the loss of trapping efficiency of the NOₓ sorbent.
(2) Loss in the reduction of released NOₓ to N₂ during stoichiometric and rich periods of operation.
(3) Loss in overall NOₓ conversion at high temperatures, e.g., 450-550° C, probably due to loss in NO₂ trapping efficiency and capacity of the NOₓ sorbent. Without wishing to be bound by any particular theory, it is believed that this loss may be related to loss at such high temperatures of the strong basic sites needed to trap NO₂ at high temperatures.

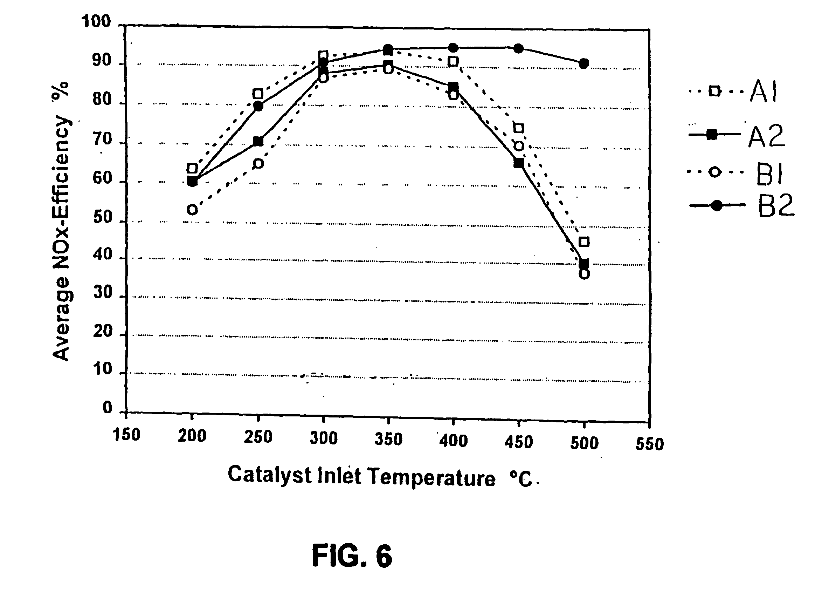

Generally, as shown in test data reported below, conventional catalytic traps used in treating NOₓ emitted from lean-burn engines showed severe loss in NOₓ activity after lean or fuel-cut aging at temperatures greater than 750° C. (Fuel-cut aging of a catalytic trap takes place when the flow of fuel to an engine whose exhaust is being treated by the catalytic trap is temporarily cut off, thereby providing extremely lean operating conditions during the fuel cut-off period of operation.) Conventional catalytic traps so aged exhibited severe loss in NOₓ activity at temperatures of about 350 to 600°C. For example, NOₓ conversion for fresh conventional catalytic traps measured at 500° C dropped from over 90% to about 40% after fuel-cut aging when tested at an inlet temperature to the conventional catalytic traps of about 350°C to 500°C. In contrast, catalytic traps in accordance with the present invention showed much better catalyst durability after similar fuel-cut aging, and retained activity for NOₓ conversion in excess of 90% at inlet temperatures to the catalytic trap of from about 350°C to 500°C. Figure 6, described below, illustrates typical test data demonstrating these results.

The US patent application serial number 09/323,658, the parent of this application, discloses a catalytic trap for conversion of NOₓ in an exhaust gas stream comprising a catalytic trap material having at least about 0.882 kg/m³ (25 g/ft³) palladium dispersed on a refractory metal oxide support, and a NOₓ sorbent. The NOₓ sorbent comprises one or more basic oxygenated compounds of one or metals selected from the group consisting of alkali metals and alkaline earth metals, including cesium and potassium The high palladium content, at least about 0.882 kg/m³ (25 g/ft³) and up to about 10.586 kg/m³ (300 g/ft³) of palladium, was found to enhance the durability of the catalytic trap even after it was subjected to severe aging conditions under lean conditions. That content of palladium provides a preferred embodiment of the present invention. Thus, in preferred embodiments of the present invention the catalytic component comprises a palladium catalytic component present in the amount of from 0.882 kg/m³ (25 g/ft³) Pd to 10.586 kg/m³ (300 g/ft³) Pd, e.g., from about 1.059 kg/m³ (30 g/ft³) Pd to about 8.822 kg/m³ (250 g/ft³) Pd.

In a particular embodiment of the invention, the catalytic component comprises, in addition to the aforesaid palladium loading, at least one of (a) platinum catalytic component present in the amount of from 0.0035 to 3.176 kg/m³ (0.1 g/ft³ to 90 g/ft³) Pt, and (b) a rhodium catalytic component present in an amount of from 0.0035 to 1.411 kg/m³ (0.1 g/ft³ to 40 g/ft³) Rh. As disclosed in the aforesaid parent application, cesium and/or potassium oxygenated compounds utilized as the NOₓ sorbents were found to provide enhanced high-temperature NOₓ conversion. A difficultly was found, however, in that the cesium and potassium oxygenated compounds were not immune from the tendency of such compounds to react with many widely used carrier members, such as cordierite, thereby depleting the cesium or potassium-based NOₓ sorbent from the composition and, over time, reducing the effectiveness of the catalytic trap material.

The present invention yields an improvement in the durability of NOₓ conversion performance of catalytic trap materials that contain basic oxygenated compounds of one or more of lithium, sodium and potassium, for example, basic oxygenated potassium compounds. It has been found that such basic oxygenated compounds react with silica components of either the supposedly inert carrier, such as cordierite, or of the catalytic trap material. Basic oxygenated compounds of potassium and cesium are, as mentioned above, notably effective for the adsorption of NOₓ during periods of lean engine operation and for the release of NOₓ during the short periods of rich operation. The improvement provided by the present invention is believed to be the result of eliminating silica components from the catalytic trap material and from the carrier member onto which the catalytic trap material is coated. Thus, silica is not used as a high surface area refractory metal oxide support and the carrier is selected from a material that does not react with the aforesaid basic oxygenated compounds because it is free of silica components. For example, the commonly used cordierite or other silicate component-containing, and therefore potassium compound-reactive, substrates are not employed as carriers. Without wishing to be bound by any particular theory, it is believed that there is a reason for the loss in effectiveness of catalytic trap materials that contain basic oxygenated compounds of one or more of lithium, sodium and potassium, and that are coated onto cordierite or other carrier members which are reactive with the aforesaid basic oxygenated compounds under conditions of use or aging of the catalytic trap as described herein. That reason is believed to be the result of an interaction between the basic oxygenated compounds and the cordierite that occurs when the coated substrate is subjected to aging cycles. By using a metallic, e.g., titanium or stainless steel, or other inert carrier substrate, e.g., alumina, titania, zirconia or silica-leached cordierite, and otherwise eliminating silica and silicates from the composition, the interaction between the aforesaid basic oxygenated compounds and the cordierite (or other source of silica components) appears to be avoided, thus providing the observed improvement in catalyst durability. Similar improvement can be obtained by using carrier substrate materials other than metals, provided they are inert to reaction with the basic oxygenated compounds under conditions of aging and use. The basic oxygenated compound-cordierite interaction is believed to involve the formation of alkali metal silicates, e.g., potassium silicates, so the use of carrier members made from ceramic-like materials that do not contain silica components, or that are otherwise non-reactive with the basic oxygenated compounds, also falls within the scope of the present invention. The catalytic trap material itself is also free of silica and silicates, at least in amounts which would react with sufficient quantities of the aforesaid basic oxygenated compounds present to adversely affect performance of the catalytic trap material.

The aforesaid basic oxygenated compounds and optional other known NOₓ sorbets (basic oxygenated compounds of other alkali metals, and of alkaline earth metals, rare earth metals, etc.) can be incorporated into the catalytic trap material of the present invention in any suitable manner. (As discussed below, however, basic oxygenated compounds of tare earth metals are preferably avoided in the practices of the present invention.) Thus, the NOₓ sorbent may be introduced in bulk particle form simply by mixing particles of the NOₓ sorbent component with the particles of refractory metal oxide support on which the platinum group metal component, e.g., palladium and/or optional platinum and rhodium catalytic components, are dispersed. Alternatively, the NOₓ sorbent may be dispersed on its own refractory metal oxide support by impregnating suitable refractory metal oxide particles with a solution of a precursor compound of the NOₓ sorbent, drying and heating in air or other oxygen-containing gas (calcining). The resultant supported NOₓ sorbent may be incorporated into the washcoat by admixing the particles with the supported catalytic component particles in a slurry to be applied as a washcoat to a carrier member. Alternatively, the supported NOₓ sorbent particles may be applied as a separate, discrete layer of the washcoat.

Alternatively, and preferably, with respect to attaining finer dispersion of the NOₓ sorbent throughout the catalytic trap material, the NOₓ sorbent can be dispersed in the washcoat by impregnating a platinum group metal-containing, calcined refractory metal oxide particulate support with a solution of a soluble precursor compound of the NOₓ sorbent metal, e.g., a nitrate or acetate such as potassium nitrate, and then drying and calcining the impregnated support in air (or other oxygen-containing gas) to decompose the impregnated precursor compound to the NOₓ sorbent. This technique may advantageously be used by dipping into a solution of one or more precursor compounds of the NOₓ sorbent a carrier member having thereon a calcined washcoat containing a refractory metal, high surface area support impregnated with the, e.g., platinum group metal, catalytic components. The technique of dipping the catalytic material -coated and calcined carrier into a solution of a precursor compound of the NOₓ sorbent is sometimes herein referred to as "post-dipping".

It will be appreciated that different portions of the NOₓ sorbent may be incorporated into the catalytic trap material by different ones of the above techniques. The choice of a particular method of incorporation of the NOₓ sorbent may in some cases be dictated by the particular components being utilized. For example, if both cesium and magnesium NOₓ sorbents are to be utilized in the same composition, precursor compounds of cesium and magnesium can be present in the same solution. In other cases, specific precursor combinations may react with each other and therefore must be applied from separate solutions.

Despite the teachings of the prior art, such as U.S. Patent 5,473,887 discussed above, it has been found that the use of rare earth metal compounds in the NOₓ sorbents is preferably eliminated or at least minimized. This is because rare earth metals, such as ceria, when oxidized during lean operations, tend to become reduced during rich or stoichiometric operations, thereby releasing oxygen which will react with and consume some of the hydrocarbons and CO which are needed to react with NOₓ in order to reduce the NOₓ to nitrogen. Therefore, preferably, no or only very limited amounts of rare earth metal oxides such as ceria are included in the catalytic trap materials of the present invention. For example, minor amounts of ceria or other rare earth metal oxides used in the known manner to thermally stabilize alumina or other refractory metal oxides do not substantially adversely affect NOₓ conversion of the compositions of the present invention.

The NOₓ sorbent of the present invention thus comprises a basic oxygenated compound (oxide, carbonate, hydroxide or mixed metal oxide) of one or more of lithium, sodium and potassium and, optionally, one or more of cesium, magnesium, calcium, strontium and barium. Examples of optional mixed oxides include barium zirconate, calcium titanate, etc.

It has been found, as reported in the above-noted parent application, that in order to provide durable activity for NOₓ reduction, especially at high temperatures (450 to 600°C), the NOₓ sorbent should comprise one or both of cesium or potassium basic oxygenated compounds present in an amount of about at least 0.0061 g/cm³ (0.1 g/in³). In order to provide durable high temperature activity for NOₓ reduction when using potassium-based NOₓ sorbents, the total content of potassium, calculated as K₂O should be at least 0.0061 g/cm³ (0.1 g/in³), e.g., 0.0061 to 0.091 g/cm³ (0.1 to 1.5 g/in³). Generally, the total loading of NOₓ sorbent (potassium plus other optional alkali and alkaline earth metal basic oxygenated compounds) is from 0.0061 to 0.152 g/cm³ (0.1 to 2.5 g/in³). The total loading may be supplied by potassium basic oxygenated compounds whose loading therefore may be from 0.0061 to 0.152 g/cm³ (0.1 to 2.5 g/in³), e.g., from 0.0061 to 0.0427 g/cm³ (0.1 to 0.7 g/in³).

It is known that catalytic trap materials are susceptible to sulfur poisoning and that at regular intervals during use, depending on factors such as the sulfur levels in the fuel whose exhaust is being treated by the catalytic trap material, the trap material must be de-sulfated, typically once in every 200 to 1000 miles (322 to 1,609 kilometers) of engine operation. Desulfation is attained by a period, e.g., three to five minutes, of rich operation at high temperature. For example, three to five minutes of operation of the catalytic trap at 650°C at λ = 0.990 to 0.995 will desulfate the catalytic traps material, where λ is the ratio of actual to stoichiometric air-to-fuel weight ratios.

The catalytic trap material of the present invention may contain other suitable components such as base metal oxide catalytic components, e.g., oxides of one or more of nickel, manganese and iron. Such components are useful at least because of their ability to trap hydrogen sulfide at rich or stoichiometric conditions and, at lean conditions, to promote the oxidation of hydrogen sulfide to sulfur dioxide. The level of released SO₂ is relatively small, and in any case, it is less obnoxious than the release of H₂S, because of the pungent unpleasant odor of the latter.

The platinum group metal catalytic components are supported on a suitable refractory metal oxide support, and are deposited thereon by techniques well known in the art, e.g., by impregnating the support with a solution of a precursor compound or complex of the catalytic metal.

Any suitable loadings of the optional platinum and rhodium catalytic components may be used, e.g., from 0.035, 0.175, 0.35 or 0.7 kg/m³ (1, 5, 10, 15 or 20 g/ft³) of either platinum or rhodium, up to, e.g., 1.05, 1.4 or 1.75 kg/m³ (30, 40 or 50 g/ft³) rhodium and up to, e.g., 2.45, 2.8 or 3.15 kg/m³ (70, 80 or 90 g/ft³) platinum.

A typical method of manufacturing a catalytic trap member in accordance with the present invention is to provide the catalytic NOₓ sorbent as a coating or layer ofwashcoat on the walls of the gas-flow passages of a suitable carrier. This may be accomplished, as is well known in the art, by impregnating a fine particulate refractory metal oxide support material with one or more catalytic metal components such as platinum group compounds or other noble metals or base metals, drying and calcining the impregnated support particles and forming an aqueous slurry of these particles. Any other suitable refractory metal oxide support may be used, e.g., activated alumina (high surface area, predominantly gamma-alumina), titania, zirconia, baria-zirconia, ceria-zirconia, lanthana-zirconia, titania-zirconia and ceria-alumina. (The small amounts of ceria in ceria-stabilized supports is not unduly detrimental to functioning of the catalytic traps material of the present invention.) Particles of a bulk NOₓ sorbent may be included in the slurry. Alternatively, the NOₓ sorbent may be dispersed into the support, preferably in a post-dipping operation, as described below. Activated alumina may be thermally stabilized before the catalytic components are dispersed thereon, as is well known in the art, by impregnating it with, for example, a solution of a soluble salt of barium, lanthanum, rare earth metal or other known stabilizer precursor, and calcining the impregnated activated alumina to form a stabilizing metal oxide dispersed onto the alumina. Base metal catalysts may optionally also have been impregnated into the activated alumina, for example, by impregnating a solution of nickel nitrate into the alumina particles and calcining to provide nickel oxide dispersed in the alumina particles.

The carrier may then be immersed into the slurry of impregnated activated alumina and excess slurry removed to provide a thin coating of the slurry on the walls of the gas-flow passages of the carrier. The coated carrier is then dried and calcined to provide an adherent coating of the catalytic component and, optionally, the NOₓ trap component, to the walls of the passages thereof. The carrier may then be immersed into a slurry of fine particles of a basic oxygenated metal compound, for example, in an aqueous slurry of fine particles of bulk strontium oxide, to provide a second or overlayer coating of a NOₓ sorbent deposited over the first or underlayer of NOₓ catalyst. The carrier is then dried and calcined to provide a finished catalytic traps member in accordance with one embodiment of the present invention.

Alternatively, the alumina or other support particles impregnated with the catalytic component may be mixed with bulk or supported particles of the NOₓ sorbent in an aqueous slurry, and this mixed slurry of catalytic component particles and NOₓ sorbent particles may be applied as a coating to the walls of the gas-flow passages of the carrier. Preferably, however, for improved dispersion of the NOₓ sorbent, the washcoat of catalytic component material, after being dried and calcined, is immersed (post-dipped) into a solution of a precursor potassium compound (or complex) and optionally one or more other precursor compounds (or complexes) of NOₓ sorbent to impregnate the washcoat with the NOₓ sorbent precursor. The impregnated washcoat is then dried and calcined to provide the NOₓ sorbent dispersed throughout the washcoat.

The basic oxygenated lithium, sodium or potassium compound or compounds, e.g., a potassium basic oxygenated compound or compounds, is applied in only a longitudinal segment of the catalytic trap, leaving another longitudinal segment of the catalytic trap free of the aforesaid basic oxygenated compounds. An example of this is now described in connection with potassium and cesium basic oxygenated metal compounds. Thus, in a given case, it may be desirable to exclude from a front longitudinal portion of the catalytic trap (the portion to which the exhaust stream being treated is first introduced) the potassium NOₓ sorbent and, when used, the cesium NOₓ sorbent. In such case, these NOₓ sorbents are relegated to a rear longitudinal portion of the catalytic trap. In other cases, it may be desirable to exclude the potassium NOₓ sorbent and, when used, the cesium NOₓ sorbent, from a rear longitudinal portion of the catalytic trap and relegate these NOₓ sorbents to a front longitudinal segment of the catalytic trap. For example, a typical so-called honeycomb-type carrier member comprises a "brick" of suitable material having a plurality of fine, gas-flow passages extending therethrough from the front face to the rear face of the carrier member. These fine gas-flow passages, which may number from about 15.5 to 139.5 (100 to 900) passages or cells per square centimeter (square inch) of face area "cpscm" (("cpsi")), have a catalytic trap material coated on the walls thereof. In some cases, it is preferred to relegate the potassium NOₓ sorbent utilized, and any cesium NOₓ sorbent, to a rear longitudinal segment of the catalytic trap so as not to reduce the activity of the front longitudinal segment of the catalytic trap for the oxidation of hydrocarbons. In such case, typically, the front 20 to 80 percent of the longitudinal length of the catalytic trap, e.g., the front 50 percent, is kept substantially free of the potassium and any cesium NOₓ sorbents, which are relegated to the rear 20 to 80 percent, e.g., the rear 50 percent, of the length of the catalytic trap. In other cases, the rear 20 to 80 percent of the longitudinal length of the carrier, e.g., the rear 50 percent, is kept substantially free of the potassium and any cesium NOₓ sorbents, which are relegated to the front 20 to 80 percent, e.g., the front 50 percent. This arrangement is preferred when enhanced desulfation of the potassium (and any cesium) NOₓ sorbent is desired, the higher temperatures generally prevailing in the front longitudinal segment of the carrier enhancing desulfation. The same effect may be attained by using two separate carrier members in series, with either the first or upstream member or the second or downstream member being devoid of cesium or potassium-based NOₓ sorbents, which may be contained in the other carrier member.

Separate, discrete layers of washcoat may be applied in successive impregnating/drying/calcining operations, e.g., to provide a bottom washcoat layer containing the optional platinum catalytic component in a bottom washcoat layer and the palladium component in a top washcoat layer. The NOₓ sorbent may be dispersed by impregnation into both the top and bottom layers.

The only basic oxygenated compound referred to in the description of Figures 1-4 is a basic oxygenated potassium compound, but it is to be understood that the description applies as well to basic oxygenated metal compounds where the metal comprises lithium or sodium. Figure 1 shows generally a catalytic trap 10 comprising a known type of refractory metal carrier 12 of generally cylindrical shape having a cylindrical outer surface, one end face comprising a front face 14 and an opposite end face comprising a rear face 14', which is identical to front face 14. (In Figure 1 there is visible only the junction of the outer surface of carrier 12 with the rear face 14' at its peripheral edge portion. Further, there is omitted from Figure 1 the usual canister within which catalytic trap 10 would be enclosed, the canister having a gas stream inlet at front face 14 and a gas stream outlet at rear face 14'.) Trap member 10 has a plurality of fine, parallel gas-flow passages 16 formed therein, better seen in enlarged Figure 1B. Gas-flow passages 16 are formed between the interleaved spirals of a corrugated metal foil that provides walls 18a and a flat metal foil that provides walls 18b. The foils are interleaved to form the carrier, as is known in the art. The metal foil may comprise any suitable refractory metal such as stainless steel, Fecralloy, etc. For example, a 403 stainless steel is suitable. Passages 16 extend through catalytic trap 10 from front face 14 to the opposite rear face 14' thereof, and are unobstructed so as to permit the flow of, e.g., an exhaust stream, longitudinally through catalytic trap 10 via gas-flow passages 16 thereof. As shown in Figure 1A, a layer 20 of the catalytic NOₓ sorbent, which in the art and sometimes below is referred to as a "washcoat", is adhered to the walls 18a and 18b. Alternatively, as illustrated in Figure 1B, washcoat layer 20 may comprise a first discrete, bottom layer 20a and a second discrete, top layer 20b which is superposed over bottom layer 20a. For purposes of illustration, the thickness of layers 20, 20a and 20b are exaggerated in, respectively, Figures 1A and 1B.

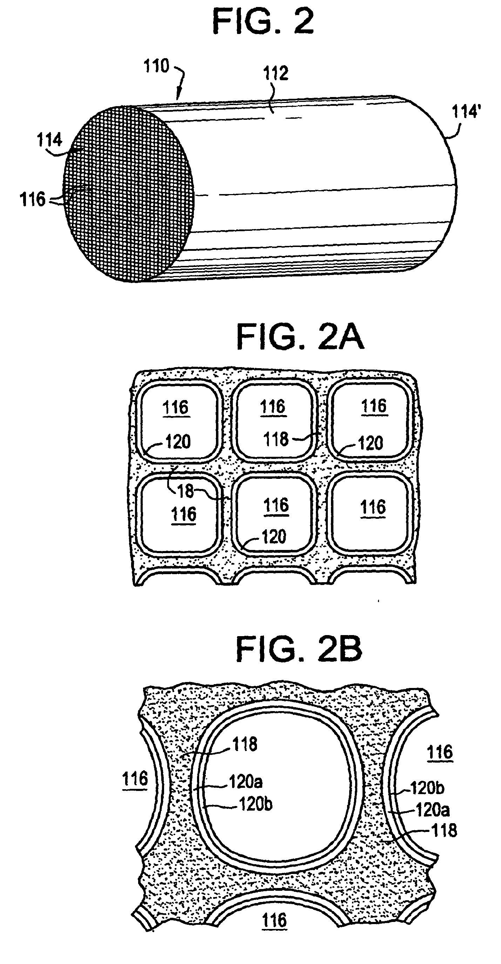

Figure 2 shows generally at 110 a catalytic trap comprising a refractory carrier member 112 of known type made of a suitable ceramic-like metal oxide material. Carrier member 112 is of generally cylindrical shape having a cylindrical outer surface, one end face comprising a front face 114 and an opposite end face comprising a rear face 114', which is identical to front face 114. (In Figure 2, as in Figure 1, there is visible only the junction of the outer surface of carrier member 112 with the rear face 114' at its peripheral edge portion, and there is omitted from Figure 2 the usual canister within which catalytic trap 110 would be enclosed.) Carrier member 112 may comprise the known type of extruded carrier, which may be made of any suitable refractory material which is free of silica components, such as alumina, titania, zirconia or a silica-leached cordierite. Cordierite contains silica, but a cordierite carrier may be treated, for example, with an acid solution, such as a sulfuric or nitric acid solution, to leach silica from the cordierite to provide a substantially silica component-free, and therefore potassium-inert, support member. Carrier member 112, like carrier member 12, has a plurality of fine, parallel gas-flow passages 116 formed therein by walls 118, better seen in enlarged Figure 2A, so as to permit the flow of, e.g., an exhaust stream, longitudinally through catalytic trap 110 via gas-flow passages 116 thereof. As will be seen from Figures 2A and 2B, walls 118 are so dimensioned and configured that gas-flow passages 116 have a substantially regular polygonal shape, substantially square in the illustrated embodiment, but with rounded corners in accordance with U.S. Patent 4,335,023, issued June 15, 1982 to J.C. Dettling et al. Of course, gas-flow passages of any suitable cross-sectional shape, square, circular, hexagonal, etc., may be used. A washcoat layer 120 of the catalytic NOₓ sorbent is adhered to the walls 118 and, as with the embodiment as shown in Figure 1B, may be comprised of a single layer 120 or, as illustrated in Figure 2B, a first discrete, bottom layer 120a and a second discrete, top layer 120b superposed over bottom layer 120a. For purposes of illustration, the thickness of layers 120, 120a and 120b are exaggerated in Figures 2A and 2B.

The cross-sectional area of the gas flow passages 16 (Figures 1A and 1B) and 116 (Figures 2A and 2B) and the thickness of the walls defining the passages may vary from one carrier to another, as may the weight and thickness of washcoat applied to such carriers. Consequently, in describing the quantity of washcoat or catalytic component or other component of the composition, it is convenient, as noted above, to use units of weight of component per unit volume of catalyst carrier. Therefore, the units grams per cubic centimeter ("g/cm³") (grams per cubic inch ("g/in³")) and kg per cubic meter ("kg/m³") (grams per cubic foot ("g/ft³")) are used herein to mean the weight of a component per volume of the carrier, including the volume of void spaces comprised of gas flow passages 16, 116 of the carrier.

The above-mentioned method of post-dipping to provide the NOₓ sorbent dispersed onto the refractory metal oxide support may be conveniently carried out by immersing into a solution of a precursor of the NOₓ sorbent a carrier member having thereon a calcined washcoat of the catalyst-impregnated high surface area support.

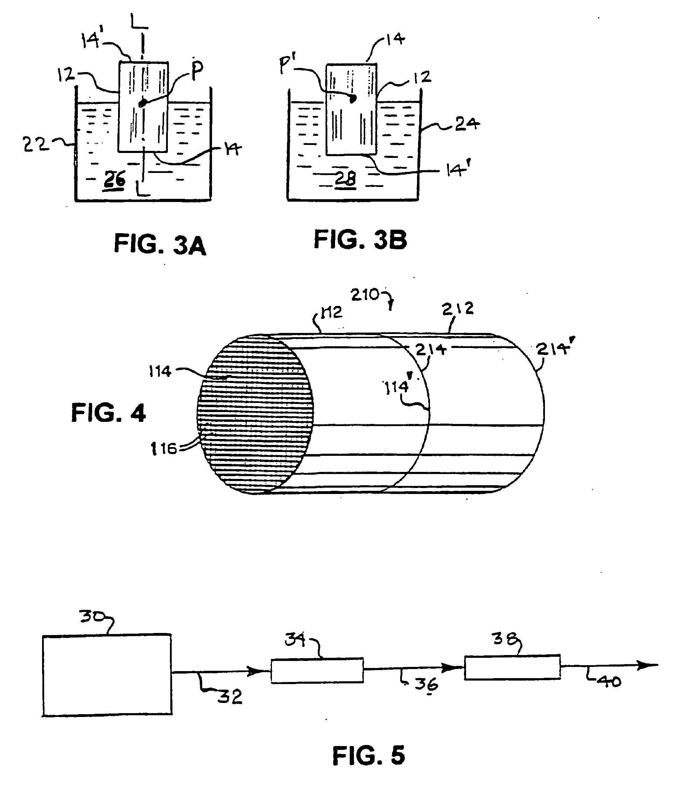

Figures 3A and 3B illustrate sequential steps in a method of post-dipping which is designed to provide the NOₓ sorbent dispersed onto the refractory metal oxide support with the potassium and, if present, cesium components relegated to a rear or downstream segment of the catalytic trap. Thus, the front segment (between front face 14 and an intermediate point P along the longitudinal axis of the carrier member 12) is kept free of cesium and potassium-based NOₓ sorbents, which are relegated to a rear segment (between rear face 14' and the intermediate point P) of the carrier member. Figure 3A shows a tank 22 within which is disposed a solution 26 of one or more NOₓ sorbent precursor compounds, excluding potassium and cesium compounds, and Figure 3B shows a tank 24 within which is dispersed a solution 28 of one or more NOₓ sorbent precursor compounds, including potassium and, optionally, cesium precursor compounds.

In Figure 3A, a carrier member 12, which already has thereon a calcined washcoat comprising, e.g., a palladium catalytic component dispersed on a refractory metal oxide support, is dipped, front face 14 first and rear face 14' uppermost, within solution 26 with the longitudinal axis L-L of carrier member 12 maintained substantially vertically. Carrier member 12 is dipped within solution 26 only to a depth defined by the point P along the longitudinal axis L-L. After dipping, carrier member 12 is removed from solution 26 and dried. The dipping and drying may be repeated in the same manner as many times as needed until the desired loading of the alkaline earth metal component precursor compound is attained.

In this method designed to provide a potassium and cesium-free NOₓ sorbent in the front longitudinal section of the carrier member 12, care is taken not to contact the solution 26 with the longitudinal segment of the carrier member 12 between point P and rear face 14'. In another embodiment the position of the carrier member 12 being dipped may be reversed from the position shown in Figure 3A to exclude the potassium NOₓ sorbent from a rear longitudinal section.) After completion of the dipping step or steps illustrated in Figure 3A, carrier member 12 is dipped within solution 28 in tank 24 (Figure 3B) with front face 14 uppermost and rear face 14' submerged below the surface of solution 28. Carrier member 12 is dipped within solution 28 only to a depth indicated by the point P' along the longitudinal axis (not shown in Figure 3B) of carrier member 12. Care is taken not to contact the solution 28 with the longitudinal segment of the carrier member 12 between point P' and front face 14 so as to avoid applying any potassium or cesium precursor compounds between point P' and front face 14. Point P' may be at the identical point along the longitudinal axis L-L as point P, or point P' may be located between point P and rear face 14' so as to provide an intermediate section of carrier member 12 wherein the NOₓ sorbent precursor of both solutions 26 and 28 are present. Dipping of carrier member 12 into solution 28 may be repeated as described above with respect to the dippings of carrier member 12 into solution 26. Dippings are followed by drying and calcining. The result is a "zoned" catalytic trap 10 in which the front section thereof is free of potassium and cesium NOₓ sorbents.

Figure 4 illustrates another embodiment of a zoned catalytic trap 210 comprised of two carrier members 112 and 212 arranged in longitudinal alignment with rear face 114' of carrier member 112 juxtaposed to, e.g., in abutting contact with, front face 214 of carrier member 212. (In Figure 4, only peripheral edges of rear face 114' of carrier member 112 and front face 214 of carrier member 212 are visible. Further, a suitable canister having an inlet and an outlet and within which carrier members 112 and 212 would be enclosed is omitted from Figure 4.) In this arrangement, the exhaust being treated is flowed into catalytic trap 210 via front face 114 thereof, through the gas-flow passages 116 of carrier member 112 out rear face 114' thereof and into front face 214 of carrier member 212. The exhaust being treated then flows through the gas-flow passages (not visible in Figure 4) of carrier member 214 and exits from rear face 214' thereof. In this embodiment, any cesium NOₓ sorbent and the potassium NOₓ sorbent utilized may be relegated to one only of carrier members 210 and 212 and excluded from the other to provide a zoned catalytic trap.

In use, the exhaust gas stream which is contacted with the catalytic trap of the present invention is alternately adjusted between lean and stoichiometric/rich operating conditions so as to provide alternating lean operating periods and stoichiometric/rich operating periods. It will be understood that the gas stream, e.g., exhaust, being treated may be selectively rendered lean or stoichiometric/rich either by adjusting the air-to-fuel ratio fed to the engine generating the exhaust or by periodically injecting a reductant into the gas stream upstream of the catalyst. For example, the composition of the present invention is well suited to treat the exhaust of engines, including diesel engines, which continuously run lean. In such case, in order to establish a stoichiometric/rich operating period, a suitable reductant, such as fuel, may be periodically sprayed into the exhaust immediately upstream of the catalytic trap of the present invention to provide at least local (at the catalytic trap) stoichiometric/rich conditions at selected intervals. Partial lean-burn engines, such as partial lean-burn gasoline engines, are designed with controls which cause them to operate lean with brief, intermittent rich or stoichiometric conditions.

Figure 5 schematically illustrates the utilization of a treatment system in which a pretreatment catalyst is interposed in the exhaust stream upstream of the catalytic trap of the present invention. Thus, a lean-burn or partial lean-burn engine 30 discharges its exhaust from an exhaust gas manifold (not shown) to an exhaust line 32, which introduces the exhaust into a pretreatment catalyst 34, which comprises a catalyst which is suitable to promote at least the oxidation of hydrocarbons. Catalyst 34 may comprise a conventional TWC catalyst which would typically include platinum, palladium and rhodium catalytic components dispersed on a high surface area refractory support and may also contain one or more base metal oxide catalytic components such as oxides of iron, manganese or nickel. Such catalysts can be stabilized against thermal degradation by well known expedients such as impregnating an activated alumina support with one or more rare earth metal oxides, e.g., ceria. Such stabilized catalysts can sustain very high operating temperatures. For example, if a fuel cut technique is utilized, temperatures as high as 950°C may be sustained in pretreatment catalyst 34. In any case, a significant portion of the hydrocarbons contained in the exhaust stream is oxidized to CO₂ and H₂O in pretreatment catalyst 34. The effluent from pretreatment catalyst 34 passes via line 36 to catalytic trap member 38 in accordance with an embodiment of the present invention, wherein NOₓ is stored and then reduced during respective lean and stoichiometric operating cycles as described above. The treated exhaust stream is discharged to the atmosphere via tailpipe 40.

### Example 1

Example 1 illustrates the unexpected benefit obtained when a catalytic trap is prepared by coating a catalytic trap material that contains potassium onto a non-reactive, i.e., potassium-inert, carrier substrate, by comparing the durability of one such catalyst member with another comprising a cordierite carrier substrate. A similar comparison using a catalytic trap material in which cesium is used in place of potassium did not exhibit any significant differences between the metal and cordierite substrates.

### Preparation of Washcoat Materials

### Bottom Coat

A bottom coat material comprising platinum-, lanthanum-, barium- and zirconium-impregnated alumina was prepared as follows. A platinum ammine-hydroxide solution was prepared. High surface area alumina was placed in a planetary mixer and the platinum ammine-hydroxide solution was dripped from a separatory funnel onto the alumina with mixing. A quantity of lanthanum nitrate equal to about 5% of the weight of the alumina was dissolved in water and the lanthanum nitrate solution was dripped from a separatory funnel into the platinum-bearing alumina, with mixing. A barium acetate and zirconium acetate solution was added in a similar manner. The mixture was milled so that 90% of the particles had a size of less than 12 micrometers ("microns"). A co-formed ceria-zirconia material and acetic acid were also added. By "co-formed" it is meant that the material is prepared by co-precipitating ceria and zirconia from a solution of soluble cerium and zirconium salts to provide precipitated particles in which ceria and zirconia are intermingled throughout the particles. Milling was continued to a particle size distribution in which 90% of the particles had a size of less than 9 microns. The total target coating weight (dry basis) for the bottom coat was 0.122 grams per cubic centimeter (2.0 grams per cubic inch). The catalytic components, alumina support material, acetic acid and water were adjusted to provide, after drying and calcination, 0.031 grams per cubic centimeter (g/cm³) (0.51 grams per cubic inch (g/in³)) BaO, 0.0049 g/cm³ (0.08 g/in³) ZrO₂, 0.00305 g/cm³ (0.05 g/in³) La₂O₃, 0.0305 g/cm³ (0.5 g/in³) CeO₂-ZrO₂ and 2.1 Kilograms per cubic meter (kg/m³) (60 grams per cubic foot (g/ft³)) platinum.

### Top Coat

The top coat slurry of catalytic material was prepared in a manner generally similar to that described above for the bottom coat. The top coat material comprised a mixture of platinum-bearing alumina, rhodium-bearing alumina and co-formed ceria-zirconia, which was combined with solutions containing barium, zirconium and palladium. The target washcoat loading (dry basis) for the top coat was about 0.146 g/cm³ (2.4 g/in³). The quantities of catalytic components, the alumina, the co-formed ceria-zirconia, water, acetic acid, etc., were adjusted to provide at the target loading 0.122 g/cm³ (0.2 g/in³) BaO, 0.0049 g/cm³ (0.08 g/in³) ZrO, 0.0152 g/cm³ (0.25 g/in³) CeO₂-ZrO₂, 1.05 kg/m³ (30 g/ft³) platinum, 1.05 kg/m³ (30 g/ft³) rhodium and 7 kg/m³ (200 g/ft³) palladium.

### Coating and Post-dipping

The bottom coat material was coated onto two cordierite honeycomb ceramic substrates and onto two stainless steel substrates. The substrates were generally cylindrical in configuration and measured 21.72 cm (4.66 inches) in diameter and 15.24 cm (6.0 inches) in length with a cell density of 62 and 93 (400 and 600) cells per cross-sectional square centimeter (cpscm) (cross-sectional square inch (cpsi)), respectively. The bottom coat was dried and calcined and the top coat was applied thereto. One coated metal substrate and one coated ceramic substrate were post-dipped into a cesium nitrate solution. The other coated substrates (one cordierite, one metal) were dipped into a potassium acetate solution as suggested in Figure 4, a process referred to herein as "post-dipping" to indicate that the potassium and optional other components are added to the catalytic material after the washcoat is applied to the carrier. Post-dipping is accomplished by dipping the coated carrier into the potassium compound solution. The wetted (dipped), coated substrates were dried at 110°C for four hours and calcined at 550°C for one hour. As a result of the post-dipping procedure, 0.0183 to 0.0244 g/cm³ (0.3 to 0.4 g/in³) of the respective metal oxides (Cs₂O, K₂O) were added to the catalytic material on the respective carrier members.

Each of the catalytic traps was engine aged in an exhaust system by canning them in a suitable canister and installing the canned catalytic traps in an exhaust treatment apparatus in the under-floor position of a vehicle, downstream from a close-coupled three-way catalyst. The catalytic traps were aged at an inlet temperature of 800°C for 25 hours at stoichiometric conditions subject to five seconds fuel cut every five minutes. The fuel cut created a change from stoichiometric to lean conditions, under which the catalytic traps were expected to lose durability. After aging, the catalytic traps were evaluated at steady state conditions at inlet temperatures ranging between 200°C and 500°C at fifty-degree intervals. The "inlet temperatures" are the temperatures of the gas stream at the inlet to the catalytic traps being tested. Measured temperatures in the interior of the catalytic traps were higher than the inlet temperatures, as high as 850°C to 875°C during rich, high load cycles at the highest inlet temperatures, because of the heat engendered by the exothermic oxidation reactions. The temperatures attained by the catalytic traps were varied by changing the speed and load on the engine while retaining a fixed space velocity of 40,000/h. The sulfur fuel level used during aging and evaluation was 50 parts per million (ppm). At each temperature, the exhaust gas composition was cycled lean for 60 seconds (λ = 1.3) and rich for two seconds (λ = 0.8). The concentration of NO in the exhaust was about 400 ppm.

For purposes of the following discussion, the catalyst members are referred to as follows.

| Catalyst Member | Sorbent, Substrate |
|---|---|
| A1 | Cs, cordierite substrate |
| A2 | Cs, metal substrate |
| B1 | K, cordierite substrate |
| B2 | K, metal substrate |

Only catalyst B2 represents an embodiment of the present invention. The conversion performances of catalyst members A1, A2, B1 and B2 are plotted in Figure 6, in which the recorded NOₓ conversion at each inlet temperature is the average NOₓ conversion over eight lean/rich cycles. After aging, catalyst members A1 and A2 showed similar NOₓ conversion of about 40 to 45 percent at an inlet temperature of 500°C. Catalyst B1 also showed similar loss of conversion after aging, dropping from more than 90% to less than 40%. It can be seen that in the inlet temperature range of 350°C to 500°C, catalyst member B2 embodying the present invention demonstrated surprisingly superior results relative to the other catalyst members. After aging, catalyst member B2 maintained more than 90% conversion at 500°C.

It is believed, based on an examination of catalyst members A1, A2, B1 and B2, that the cesium and potassium in catalyst members A1 and B1 migrated during the aging cycle from the washcoat into the ceramic substrate. It is further believed that cesium was lost somehow from the catalytic material of catalyst member A2 after aging. These losses of the sorbent from the washcoat are believed to account for the post-aging loss in high-temperature conversion performance. However, the potassium of catalyst member B2 appears to have remained in the washcoat after aging, and this is believed to account for the superior durability that was observed. Lithium and sodium basic oxygenated compounds are believed to exhibit the same or similar retention and durability characteristics as the basic oxygenated potassium compound.

The following Examples illustrate the enhanced durability and NOₓ conversion efficiency obtained by coating catalytic trap materials in accordance with embodiments of the present invention onto potassium-inert carriers made of alpha alumina and titania, as compared to coating the catalytic trap materials onto cordierite carriers, cordierite including a significant silicate component.

### Example 2

A. Alpha alumina refractory carrier members were coated with a catalytic trap material in accordance with an embodiment of the present invention. The alpha alumina refractory carrier members were, in each case, cylindrical members measuring 3.8 cm (1.5 inches) in diameter and 7.6 cm (3 inches) in length and had 62 parallel, longitudinal gas-flow passages ("cells") per square centimeter of face area (400 cells per square inch of face area). Two washcoat coatings were applied to the alpha alumina carrier members, as described below.
B. The first or bottom coating was prepared by impregnating alumina powder with a quantity of platinum ammine hydroxide solution sufficient to bring the powder to incipient wetness, and fixing the platinum onto the alumina powder using acetic acid. The alumina powder is a high surface area (about 150 square meters per gram), primarily gamma alumina material. The alumina was then made into a slurry in distilled water in which barium acetate crystals were dissolved and to which zirconium acetate solution and rhodium nitrate solution were added. The ingredients were mixed together to form a slurry with about 40 to 42% by weight solids, based on the calcined weight of the solids. The slurry was milled to a. particle size of 90% of the particles having a diameter of less than 10 microns. The slurry was then applied onto the alpha alumina carriers to coat the walls of their gas-flow passages. After coating, the carriers were dried for 3 to 4 hours at 110°C then calcined 1 hour at 550°C. The final bottom coat loading on each carrier was 0.137 g/cm³ (2.25 g/in³). The calcined bottom coat contained about 0.107 g/cm³ (1.75 g/in³) alumina, 1.05 kg/m³ (30 g/ft³ Pt), 0.0152 g/cm³ (0.25 g/in³) BaO, and 0.0049 g/cm³ (0.08 g/in³) ZrO₂.
C. The second or top coat was prepared by impregnating a second batch of the alumina powder with a palladium nitrate solution and preparing a slurry of the impregnated alumina powder in distilled water to which zirconium acetate and barium acetate crystals were added. The solids content of this slurry was about 40% by weight, based on the calcined weight of the solids. The slurry was coated onto the bottom-coated alpha alumina carriers obtained in Part B of this Example 2 as a top coat overlying the bottom coat. After coating, the carriers were dried for 3-4 hours at 110°C, and then calcined 1 hour at 550°C. The final top coat loading on each carrier member was 0.1287 g/cm³ (2.109 g/in³). The calcined top coat contained about 0.1067 g/cm³ (1.75 g/in³) Pd on alumina, 0.0152 g/cm³ (0.25 g/in³) BaO, 0.0049 g/cm³ (0.08 g/in³) ZrO, and 1.75 kg/m³ (50 g/ft³) Pd.
D. The coated carrier member was then post-impregnated with a solution of barium acetate and potassium nitrate. The coated carriers were then dried for 3 to 4 hours at 110°C and calcined 1 hour at 550°C. The gain in weight (calcined basis) based on BaO was 0.0213 g/cm³ (0.35 g/in³) and based on K₂O was 0.0274 g/cm³ (0.45 g/in³). The final calcined washcoat loading on each sample catalytic traps was 0.0488 g/cm³ (0.8 g/in³) and the total amount of precious metal was 2.975 kg/m³ (85 g/ft³) with a weight ratio of 6 Pt/ 10 Pd/1 Rh, which provided 1.05 kg/m³ (30 g/ft³) Pt, 1.75 kg/m³ (50 g/ft³) Pd and 0.175 kg/m³ (5.0 g/ft³) Rh in the finished catalytic traps.
E. The catalytic traps of this Example 2 were designated Sample 2.

### Example 3

A. An alpha alumina refractory carrier member was coated with a catalytic trap material in accordance with an embodiment of the present invention. The alpha alumina refractory carrier members were, in each case, cylindrical members measuring 3.81 cm (1.5 inches) in diameter and 7.62 cm (3 inches) in length and had 62 parallel, longitudinal gas-flow passages ("cells") per square centimeter of face area (400 cells per square inch of face area). Two washcoat coatings were applied to the titania carrier members, as follows.
B. The first or bottom coating was prepared by impregnating alumina powder with a quantity of platinum ammine hydroxide solution sufficient to bring the powder to incipient wetness, and fixing the platinum onto the alumina powder using acetic acid. The alumina powder is a high surface area (about 150 square meters per gram), primarily gamma alumina material. The alumina was then made into a slurry in distilled water in which barium acetate crystals were dissolved and to which zirconium acetate solution and rhodium nitrate solution were added. The ingredients were mixed together to form a slurry with about 42% by weight solids, based on the calcined weight of the solids. The slurry was milled to a particle size such that 90 percent of the particles had a diameter of less than 10 microns ("90% <10 microns"). The slurry was then applied onto the alpha alumina carriers to coat the walls of their gas-flow passages. After coating, the carriers were dried for 3 to 4 hours at 110°C, then calcined 1 hour at 550°C. The final bottom coat loading on each carrier was 0.1288 g/cm³ (2.112 g/in³). The calcined bottom coat contained (1.05 kg/m³ (30 g/ft³) Pt, 0.35 kg/m³ (10 g/ft³) Rh, about 0.1067 g/cm³ (1.75 g/in³) 0.015 g/cm³ alumina, (0.25 g/in³)BaO, and 0.0988 g/cm³ (0.8 g/in) Zro².
C. The second or top coat was prepared by impregnating a second batch of the alumina powder with a palladium nitrate solution and preparing a slurry of the impregnated alumina powder in distilled water to which zirconium acetate and barium acetate crystals were added. The solids content of this slurry was about 42% by weight, based on the calcined weight of the solids. The slurry was milled to a particle size 90% <10 microns and then was coated onto the bottom-coated alpha alumina carriers obtained in Part B of this Example as a top coat overlying the bottom coat. After coating, the carriers were dried for 3-4 hours at 110°C, and then calcined 1 hour at 550°C. The final top coat loading on each carrier member was 0.1278 g/cm³ (2.095 g/in³). The calcined top coat contained 1.75 kg/m³ (50 g/ft³) Pd and 0.35 kg/m³ (10 g/ft³) Rh.
D. The coated carrier members were then post-impregnated with a solution containing barium acetate, potassium nitrate, palladium nitrate, and rhodium nitrate so that the weight gain of the corresponding components after calcination was 0.02135 g/cm³ (0.35 g/in³) BaO and 0.02745 g/cm³ (0.45 g/in³) K₂O. The loadings of the palladium and rhodium catalytic components were 1.75 kg/m³ (50 g/ft³) Pd and 0.7 kg/m³ (20 g/ft³) Rh. The coated carriers were then dried for 3 to 4 hours at 110°C and calcined 1 hour at 550°C. The final post-dip loading on each core was 0.0660 g/cm³ (1.082 g/in³) dry gain.
E. The catalytic traps of this Example 3 were designated Sample 3.

### Comparative Example 4

A. Comparative catalytic traps were prepared by coating a catalytic trap material in accordance with another embodiment of the present invention onto cordierite refractory carrier members. The cordierite carriers contained about 30% by weight silica and each of the cylindrical carriers measured 3.8 cm (1.5 inches) in diameter and 7.6 cm (3 inches) in length and had 62 parallel, longitudinal gas-flow passages ("cells") per square centimeter of face area (400 cells per square inch of face area). As in Examples 2 and 3, the comparative catalytic traps were prepared with a two-layered washcoat, a bottom coat and a top coat.
B. Alumina powder of the same type as used in Example 2 was impregnated with a solution of platinum ammine hydroxide as in Example 2 to give in the bottom coat of the finished catalytic trap sample a platinum loading of 2.1 kg/m³ (60 g/ft³) Pt. The platinum-impregnated alumina was then made into a slurry by placing it into a distilled water solution of lanthanum nitrate, barium acetate and zirconium acetate in amounts to attain in the finished catalytic trap the following loading of metal oxides, on a calcined basis: BaO = 0.0091 g/cm³ (0.15 g/in³), ZrO₂ = 0.0049 g/cm³ (0.08 g/in³), and La₂O₃ = 0.0030 g/cm³ (0.05 g/in³). The resulting slurry was continuously milled until a particle size of 90% of the particles having a diameter of 12 microns or less was attained. A commercially available ceria-zirconia powder containing 28 % by weight ceria balance zirconia, was added to the slurry. Distilled water and acetic acid were added to the slurry to reduce its viscosity, providing a pH of about 5 to 5.25. The slurry was milled to a particle size of 90% of the particles having a diameter of 9 microns or less. The slurry was then coated onto the walls of the gas-flow passages of the cordierite carriers and the coated substrates were dried at 110°C for 4 hours and calcined at 550°C for 1 hour. The bottom coat loading after such drying and calcining was 0.122 g/cm³ (2 g/in³), including a loading of 0.076 g/cm³ (1.25 g/in³) of platinum on alumina.
C. The top coat was then prepared by impregnating a fresh batch of the same type of alumina powder as used in Example 2 with a platinum ammine hydroxide solution as in Example 1. Distilled water was added to provide an amount of platinum ammine hydroxide solution sufficient to attain incipient wetness of the alumina powder. A rhodium-impregnated alumina powder was then prepared by impregnating rhodium nitrate solution onto another batch of the same type of alumina as used to make the platinum-impregnated alumina, to give in the finished sample a rhodium loading of about 1.83 g/cm³ (30 g/in³) Rh. The platinum- impregnated alumina and the rhodium-impregnated alumina were made into a slurry with distilled water, barium acetate, and zirconium acetate solution. The slurry was continuously milled to attain a particle size of 90% of the particles having a diameter of less than 12 microns. A ceria-zirconia powder identical to that used in Part A of this Example 4 was added to the slurry in an amount to give a loading of 0.01525 g/cm³ (0.25 g/in³) of ceria-zirconia in the finished sample, together with palladium nitrate and the reserved distilled water. The top coat of the finished sample had a loading of 0.0122 g/cm³ (0.2 g/in³) BaO, 0.0049 g/cm³ (0.08 g/in³) ZrO₂, 1.05 kg/m³ (30 g/ft³) Rh, 7 kg/m³ (200 g/ft³) Pd and 1.05 kg/m³ (30 g/ft³) Pt.
   The top coat obtained in Step C was then applied over the bottom coat (Step B) on the cylindrical cordierite substrate followed by drying at 110°C for 3 hours and calcining at 550°C for 1 hour. The total top coat loading was about 0.1464 g/cm³ (2.4 g/in³) and included 1.05 kg/m³ (30 g/ft³) Pt.
D. The calcined catalytic trap was then post-dipped in a solution of potassium nitrate, a NOₓ sorbent precursor compound, in an amount to give in the finished product a weight of 0.02745 g/cm³ (0.45 g/in³) of potassium oxide as the NOₓ sorbent. The post-dipped trap members were then dried at 110°C for 4 hours and calcined at 550°C for 1 hour.
E. The catalytic traps of this Example 4 were designated Sample 4-C (Comparative).

### Example 5

A. Titania refractory carrier members were prepared by placing a flat titanium foil layer and a corrugated titanium foil layer against each other and rolling the sandwiched foils into a cylindrical configuration as illustrated in Figure 1. The sinusoidal configuration of the edge profile of the corrugated foil layer cooperates with the flat foil layer in the rolled article to provide a plurality of parallel, gas-flow passages extending therethrough, as best seen in Figures 1A and 1B. The resulting cylinders were then calcined under conditions to oxidize at least the surface of the titanium to titania to provide cylindrical titania carrier members measuring 3.81 cm (1.5 inches) in diameter and 7.62 cm (3 inches) in length. The titania carriers of this Example had 62 parallel, longitudinal gas-flow passages ("cells") per square centimeter of face area (400 cells per square inch of face area).
B. Two washcoat coatings were applied to the titania carrier member, exactly as described in Example 3 to provide catalytic traps identical to those of Example 3 except that the titania carrier members of this Example 5 were substituted for the alpha alumina carrier members of Example 3.
C. The catalytic traps of this Example 5 were designated Sample 5,

### Example 6

Each of the catalytic traps of Examples 2 to 5 was aged in a flow reactor in a gas composition containing 10% steam and balance air at a temperature, indicated below, of 800°C, 850°C, or 900°C, for 12 hours. Each aged carrier member was then placed into a reactor and heated in air to 250°C. The gas feed described below was then introduced into the reactor with the inlet gas composition maintained lean for 60 seconds and rich for 6 seconds as described below. Inlet and outlet values of NOₓ were measured across the reactor using a Fourier transform infra red ("FTIR") exhaust gas analyzer, model Rega 7000, manufactured by Nicolet Company of Madison, Wisconsin. This cycle was repeated five times and the measured NOₓ conversions (percentage of inlet NOₓ, converted to N₂) were averaged over the five cycles.

### Test Gas Compositions

The gas composition at lean conditions (λ = 1.5) contained 10% CO₂, 10 % steam, 7.5 O₂, 50 parts per million by volume ("ppmv") C₁ hydrocarbons and 500 ppmv NO.

The gas composition at rich conditions (λ = 0.86) contained 10% CO₂, 10% steam, 0% O₂, 7.5 % CO, 50 ppmv C₁ hydrocarbon and 500 ppmv NO.

The NOₓ conversions attained over the sample catalyzed traps (Samples A-D) were measured at gas inlet temperatures (to the catalyzed trap samples) of 250, 275, 300, 350, 400, 450, 500, and 550°C.

### Capacity Measurement

NOₓ capacity of the tested catalytic traps was measured as grams of NO₂ stored per liter of catalytic trap volume. The catalytic trap samples were reduced for one minute in a rich atmosphere (λ = 0.86) containing CO, CO₂, NO, steam and nitrogen. This step regenerated the NOₓ trap, i.e., released NO from the NOₓ adsorption sites on the catalytic trap material. After regeneration, the gas composition was changed from rich (λ = 0.86) to lean (λ = 1.5) by replacing the CO in the gas flow with oxygen. This oxidized the NO to NO₂ and thus caused it to be trapped at the NO adsorption sites, resulting in NO disappearance from gas phase. The adsorption process is continued for about 5 to 10 minutes depending on the efficiency of NOₓ trapping. Data points were taken at a rate of about one data point per 1-2 seconds. From the data, the cumulative NOₓ trapped was measured as a function of NOₓ conversion, which eventually drops as the catalytic trap gets more saturated. This resulted in a plot of NOₓ conversion as a function of NOₓ trapping capacity measured in grams of NO₂ trapped per liter of catalytic trap volume. This measurement was repeated at temperature intervals between 250° and 550° or 600°C at 50% and 80% NOₓ conversion, as a function of reactor inlet temperature.

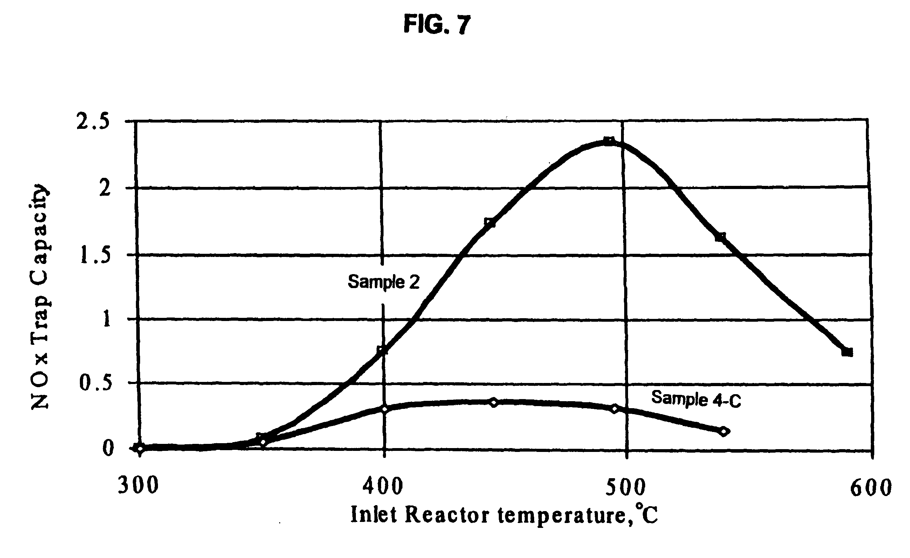

The results of testing at each temperature are graphically illustrated in Figures 7 through 10.

Figure 7 is a plot which shows on the vertical axis the capacity of the catalytic trap to absorb NOₓ plotted against, on the horizontal axis, the temperature of the test gas at the inlet to the reactor, i.e., to the catalytic trap member. Figure 7 shows that the NOₓ trapping capacity of Sample 2 utilizing alpha alumina carrier members is significantly greater than that of Sample 4-C using cordierite (silica-containing) carrier members to support a coating of catalytic trap material similar to that of Sample 2. It is seen that, at temperatures above about 355°C, the capacity of the catalytic members of Sample 2 to retain NOₓ is markedly greater than that of comparative Sample 4-C. In both cases, the NOₓ trapping capacity of the samples was determined at 50% NOₓ conversion, measured as a function of inlet reactor temperature. Both samples were aged at 850°C.

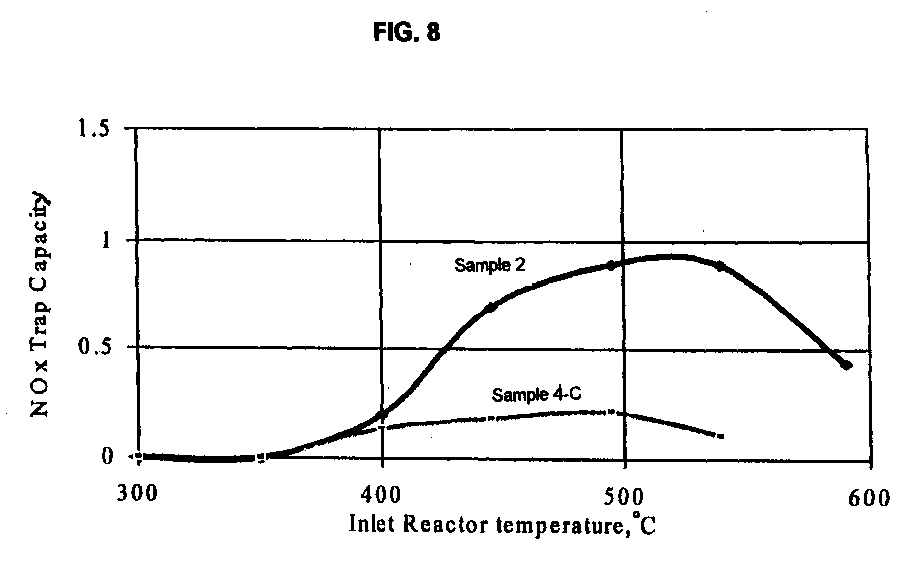

Figure 8 shows superior NOₓ trapping capacity of Sample 2 as compared to Sample 4-C when determined at 80% NOₓ conversion measured as a function of inlet reactor temperature. Both samples were aged at 850°C. It is seen that Sample 2 in accordance with an embodiment of the present invention provides markedly greater NOₓ trapping capacity at all temperatures above about 395°C.

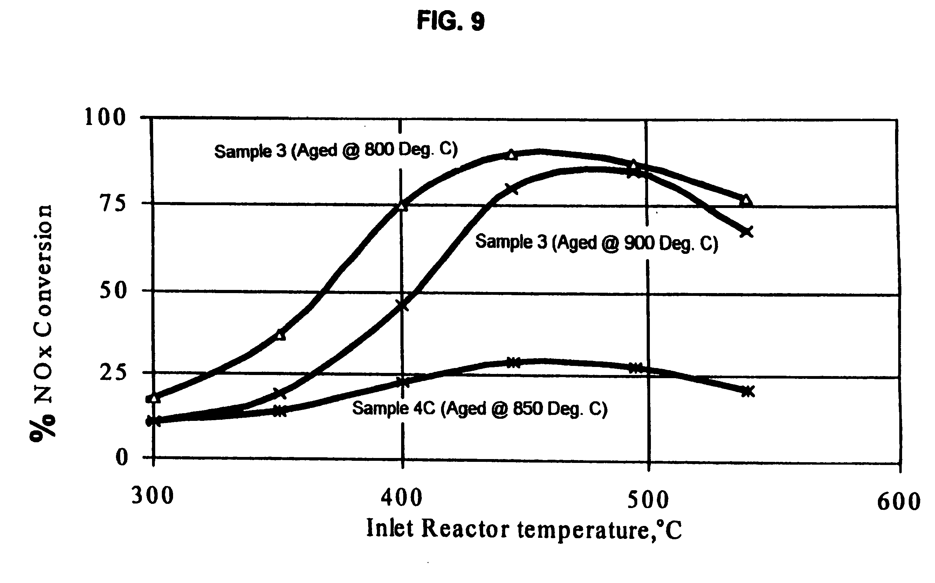

Figure 9 shows superior NOₓ conversion attained by two Sample 3 catalytic traps, one aged at 800°C and the other at 900°C, as compared to comparative Sample 4-C aged at 900°C. It is seen that at reactor inlet temperatures over about 330°C the 900°C-aged Sample 2 provides significantly better NOₓ conversion than does comparative Sample 4-C, as does the 900°C-aged Sample 3 over the entire tested temperature range.

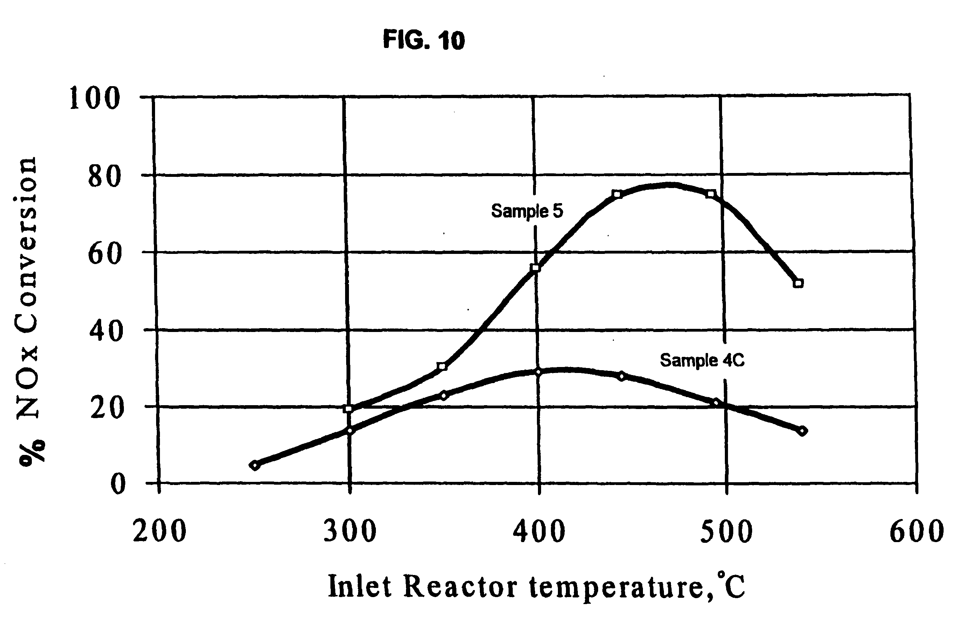

Figure 10 shows superior NOₓ conversion of the catalytic trap of Sample 5, which uses titania carrier members, over the entire tested temperature range, as compared to comparative Sample 4-C. Both samples were aged at 850°C.

It is clear that supporting catalytic trap materials comprising a NOₓ reduction catalyst and a NOₓ sorbent on potassium-inert carrier members such as alpha alumina or titania shows a great advantage over supporting the same type of catalytic trap material on a ceramic substrate.

### Example 7

Electron-dispersive spectroscopy ("EDS") was employed to examine the catalytic traps of Samples 2, 3, 4-C and 5. In each case the sample was oven-aged at 950°C for twelve hours. In the case of Sample 4-C, the comparative sample in which the washcoat of catalytic trap material was dispersed on a cordierite carrier member, EDS examination showed significant migration of potassium into the cordierite substrate, thereby depleting the potassium content of the washcoat of catalytic trap material and reducing its efficacy as a catalytic trap. The cordierite substrate of Example 4-C contained the substantial amount of silicates found in cordierite which has not been acid-leached. EDS examination of Samples 2, 3 and 5, which are embodiments of the present invention, showed retention of the potassium within the washcoat without migration of the potassium into the substrate provided by the carrier member, which was alpha alumina in the case of Samples 2 and 3, and titania in the case of Sample 5. The alpha alumina and titania substrates of Samples 3 and 5 were substantially silica-free.

By providing a catalytic trap member that is inert to reaction with basic oxygenated compounds of lithium, sodium or potassium, the catalytic trap maintains durability for NOₓ conversion even after aging, so that the present invention provides a significant advantage relative to prior art NOₓ catalytic trap members.

## Claims

1. A catalytic trap for conversion of NOₓ in an exhaust gas stream which is periodically alternated between (1) lean and (2) stoichiometric or rich conditions, the catalytic trap being substantially free of silica components and comprising:
(a) a catalytic trap material which is substantially free of silica components and which comprises the following components (i) a refractory metal oxide support having dispersed thereon a catalytic component effective for promoting the reduction of NOₓ under stoichiometric or rich conditions of the exhaust stream, and (ii) a NOₓ sorbent effective for adsorbing NOₓ under lean conditions of the exhaust gas stream and desorbing NOₓ under stoichiometric or rich conditions of the exhaust gas stream, the NOₓ sorbent comprising one or more basic oxygenated compounds of an alkali metal selected from the group consisting of lithium, sodium and potassium, the other components of the catalytic trap material being inert to said basic oxygenated compounds; and
(b) a refractory carrier member which is inert to said basic oxygenated compounds and on which the catalytic trap material is coated and wherein the carrier member has a longitudinal axis, a front face and a rear face, and a plurality of parallel gas-flow passages extending longitudinally therethrough and connecting the front and rear faces of the carrier member, the gas-flow passages being defined by walls on which the catalytic NOₓ sorbent is coated, the NOₓ sorbent being disposed only in a first longitudinal segment of the catalytic trap defined between one of the front and rear faces of the carrier member and an intermediate point along the longitudinal axis thereof, whereby one or more basic oxygenated compounds of an alkali metal selected from the group consisting of lithium, sodium and potassium are excluded from a second, longitudinal segment of the catalytic trap defined between the other of the front and rear faces of the carrier member and the said intermediate point, the refractory carrier member being selected from the group consisting of a refractory metal, alumina, titania, zirconia, zirconia-alumina, titania-zirconia, titania-alumina, lanthana-alumina, baria-zirconia-alumina, niobia-alumina, and silica-leached cordierite

2. The catalytic trap of claim 1, the catalytic trap comprising:
(a) the catalytic trap material comprising (ii) the NOₓ sorbent comprising one or more basic oxygenated compounds of an alkali metal selected from the group consisting of lithium, sodium and potassium present in an amount sufficient to provide, after reaction with the said basic oxygenated compounds of at least 0.0061 g/cm³ (0.1 g/in³), calculated as M₂O, where M = Li, Na or K.

3. The catalytic trap of claim 1 or claim 2 wherein the alkali metal comprises potassium.

4. The catalytic trap of claim 3 wherein the catalytic component is selected from the group consisting of one or more of palladium, platinum and rhodium catalytic components.

5. The catalytic trap of claim 2 wherein the basic oxygenated compounds are present in an amount sufficient to provide an excess of from 0.0061 to 0.152 g/cm³ (0.1 to 2.5 g/in³) of said basic oxygenated compounds.

6. The catalytic trap of claim 5 wherein the alkali metal compound comprises potassium.

7. The catalytic trap of claim 1 wherein the refractory metal is selected from the group consisting of stainless steel, Fecralloy and titanium.

8. The catalytic trap of claim 1 wherein the catalytic component is selected from the group consisting of one or more of palladium, platinum and rhodium catalytic components.

9. The catalytic trap of claim 1 wherein the carrier member comprises a potassium-inert carrier member.

10. The catalytic trap of claim 1 wherein the first layer comprises a first NOₓ sorbent comprising a first potassium oxygenated compound and a first catalytic component, and the second layer comprises a second NOₓ sorbent comprising a second potassium oxygenated compound and a second catalytic component.

11. The catalytic trap of claim 10 wherein the first component comprises a platinum catalytic component and the second catalytic component comprises a platinum catalytic component, a rhodium catalytic component and a palladium catalytic component.

12. The catalytic trap of claim 11 wherein (a) the first catalytic component comprises a platinum catalytic component and the first layer further comprises lanthanum, barium and zirconium components, and (b) the second catalytic component comprises a platinum catalytic component, a palladium catalytic component and a rhodium catalytic component, and the second layer further comprises barium and zirconium components.

13. The catalytic trap of claim 1 or claim 2 wherein the NOₓ sorbent further comprises one or more basic oxygenated compounds of one or more metals selected from the group consisting of (a) alkali metals other than lithium, sodium and potassium, (b) alkaline earth metals and (c) rare earth metals.

14. The catalytic trap of claim 1 or claim 2 wherein the NOₓ sorbent further comprises one or more basic oxygenated compounds of one or more metals selected from the group consisting of magnesium, calcium, barium, strontium, and cesium.

15. The catalytic trap of claim 1 or claim 2 wherein the catalytic component comprises a palladium catalytic component present in the amount of from 0.882 kg/m³ (25 g/ft³ ) Pd to 10.586 kg/m³ (300 g/ft³) Pd.

16. The catalytic trap of claim 1 or claim 2 wherein the NOₓ sorbent is present in the amount of from 0.0061 to 0.152 g/cm³ (0.1 to 2.5 g/in³) and at least from 0.0061 to 0.091 g/cm³ (0.1 to 1.5 g/in³) of the NOₓ sorbent is provided by one or more basic oxygenated compounds of potassium.

17. The catalytic trap of claim 16 wherein the catalytic component further comprises from 0.882 kg/m³ (25 g/ft³) Pd to 10.586 kg/m³ (300 g/ft³) Pd.

18. The catalytic trap of claim 1 or claim 2 wherein the catalytic component comprises at least one of (a) a platinum catalytic component present in the amount of from 0.0035 to 3.176 kg/m³ (0.1 g/ft³ to 90 g/ft³) Pt, and (b) a rhodium catalytic component present in an amount of from 0.0035 to 1.764 kg/m³ (0.1 g/ft³ to 50 g/ft³) Rh.

19. The catalytic trap of claim 1 or claim 2 wherein the catalytic component further comprises one or more base metal oxide catalytic components selected from the group consisting of oxides of one or more of nickel, manganese and iron.

20. The catalytic trap of claim 3 wherein the NOₓ sorbent further comprises one or more basic oxygenated compounds of cesium disposed in the first longitudinal segment and excluded from the second longitudinal segment.

21. The catalytic trap of claim 1, claim 2 or claim 3 wherein the distance from the front face of the carrier to the intermediate point comprises from 20 percent to 80 percent of the length of the carrier along its longitudinal axis.

22. The catalytic trap of claim 1, claim 2 or claim 21 wherein the carrier member comprises a plurality of discrete carrier member sections arranged in series flow communication along the longitudinal axis, and the first longitudinal segment and the second longitudinal segment are comprised of respective discrete carrier member sections.

23. The catalytic trap of claim 1 or claim 2 in combination with a treatment catalyst disposed upstream of the catalytic trap relative to the exhaust gas stream, the treatment catalyst being effective at least to promote under oxidation conditions the oxidation of hydrocarbons to CO₂ and H₂O.

24. The catalytic trap of claim 1 or claim 2 wherein the first longitudinal segment is disposed between the front face of the carrier member and the intermediate point along the longitudinal axis thereof.

25. The catalytic trap of claim 1 or claim 2 wherein the first longitudinal segment is disposed between the rear face of the carrier member and the intermediate point along the longitudinal axis thereof.

26. A method of treating an exhaust gas stream containing NOₓ to abate the NOₓ content of the stream comprises maintaining the stream under alternating periods of (1) lean and (2) stoichiometric or rich operation and contacting the steam during the periods of both lean and stoichiometric or rich operation with the catalytic trap material of any one of claim 1 or claim 2 at conditions whereby at least some of the NOₓ in the exhaust gas stream is adsorbed by the catalytic trap material during the periods of lean operation and is released from the catalytic trap material and reduced to nitrogen during the periods of stoichiometric or rich operation.

27. A method of treating an exhaust gas stream containing NOₓ to abate the NOₓ content of the stream comprises maintaining the stream under alternating periods of (1) lean and (2) stoichiometric or rich operation and contacting the stream during the periods of both lean and stoichiometric or rich operation with the catalytic trap material of claim 3, at conditions whereby at least some of the NOₓ in the exhaust gas stream is adsorbed by the catalytic trap material during the periods of lean operation and is released from the catalytic trap material and reduced to nitrogen during the periods of stoichiometric or rich operation.

28. The method of claim 26 or claim 27 wherein the exhaust gas stream contains hydrocarbons and further comprising contacting the exhaust gas stream under oxidizing conditions with a catalyst effective to promote oxidation of hydrocarbons, whereby to oxidize hydrocarbons contained therein, prior to contacting the exhaust gas stream with the catalytic trap.

29. The method of claim 26 or claim 27 wherein the temperature of the exhaust gas stream immediately prior to its contacting the catalytic trap material is from 250°C to 800°C.

## Patentansprüche

1. Katalytische Falle zur Umwandlung von NOₓ in einem Abgasstrom, welcher periodisch zwischen (1) mageren und (2) stöchiometrischen oder fetten Bedingungen wechselt, wobei die katalytische Falle im Wesentlichen keine Siliziumdioxidbestandteile aufweist und umfasst:
(a) ein katalytisches Fallenmaterial, welches im Wesentlichen keine Siliziumdioxidbestandteile aufweist und im Wesentlichen die folgenden Bestandteile umfasst (i) einen feuerfesten Metalloxidträger, auf welchem ein katalytischer Bestandteil dispergiert ist, welcher wirksam ist, um die Reduktion von NOₓ unter stöchiometrischen oder fetten Bedingungen des Abgasstromes zu begünstigen, und (ii) ein NOₓ-Sorptionsmittel, welches wirksam ist, um NOₓ unter mageren Bedingungen des Abgasstromes zu adsorbieren und NOₓ unter stöchiometrischen oder fetten Bedingungen des Abgasstromes zu desorbieren, wobei das NOₓ-Sorptionsmittel ein oder mehrere basische oxigenierte Verbindungen eines Alkalimetalls umfassen, gewählt aus der Gruppe bestehend aus Lithium. Natrium und Kalium, wobei die anderen Bestandteile des katalytischen Fallenmaterials inert gegenüber dem basischen oxygenierten Verbindungen sind; und
(b) ein feuerfestes Trägerelement, welches gegenüber den basischen oxygenierten Verbindungen inert ist und auf welchen das katalytische Fallenmaterial aufgebracht ist und wobei das Trägerelement eine Längsachse, eine vordere Fläche und eine hintere Fläche aufweist, und eine Vielzahl von parallelen Gasdurchflussdurchgängen, welche sich längs hindurch erstrecken, und die vorderen und hinteren Flächen des Trägerelementes verbinden, wobei die Gasdurchflussdurchgänge durch Wände definiert werden, auf welchem das katalytische NOₓ-Sorptionsmittel aufgebracht ist, wobei das NOₓ-Sorptionsmittel nur auf einem ersten Längssegment der katalytischen Falle abgeschieden ist, definiert zwischen einer der vorderen und hinteren Flächen des Trägerelementes und einem dazwischenliegenden Punkt entlang der Längsachse dessen, wobei eine oder mehrere basische oxygenierte Verbindungen eines Alkalimetalls, gewählt aus der Gruppe bestehend aus Lithium, Natrium und Kalium, von einem zweiten Längssegment der katalytischen Falle, welches zwischen der anderen der vorderen und hinteren Flächen des Trägerelementes und dem dazwischenliegenden Punkt definiert ist, ausgeschlossen sind, wobei das feuerfeste Trägerelement aus der Gruppe gewählt ist, bestehend aus einem feuerfesten Metall, Aluminiumoxid, Titandioxid, Zirkoniumdioxid, Zirkoniumdioxid-Aluminiumoxid, Titandioxid-Zirkoniumdioxid, Titandioxid-Aluminiumoxid, Lanthandioxid-Aluminiumoxid, Bariumdioxid-Zirkoniumdioxid-Aluminiumoxid, Niobdioxid-Aluminiumoxid und Siliziumausgelaugtes Cordierit.

2. Katalytische Falle nach Anspruch 1, wobei die katalytische Falle umfasst:
(a) das katalytische Fallenmaterial umfassend (ii) das NOₓ-Sorptionsmittel umfassend ein oder mehrere basische oxygenierte Verbindungen eines Alkalimetalls gewählt aus der Gruppe bestehend aus Lithium, Natrium und Kalium, vorhanden in einer wirksamen Menge, um nach der Reaktion mit den basischen oxygenierten Verbindungen wenigstens 0,0061 g/cm³ (0,1g/in³) bereitzustellen, berechnet als M₂O, wobei M = Li, Na oder K.

3. Katalytische Falle nach Anspruch 1 oder 2, wobei das Alkalimetall Kalium umfasst.

4. Katalytische Falle nach Anspruch 3, wobei der katalytische Bestandteil aus der Gruppe ausgewählt ist, bestehend aus einem oder mehreren katalytischen Palladium-, Platin- und Rhodiumbestandteilen.

5. Katalytische Falle nach Anspruch 2, wobei die basischen oxygenierten Verbindungen in einer Menge vorhanden sind, ausreichend um einen Überschuss von 0,0061 bis 0,152 g/cm³ (0,1 bis 2,5 g/in³) der basischen oxygenierten Verbindungen bereitzustellen.

6. Katalytische Falle nach Anspruch 5, wobei die Alkalimetallverbindung Kalium umfasst.

7. Katalytische Falle nach Anspruch 1, wobei das feuerfeste Metall aus der Gruppe ausgewählt ist, bestehend aus rostfreiem Stahl, Fecralloy und Titan.

8. Katalytische Falle nach Anspruch 1, wobei der katalytische Bestandteil aus der Gruppe gewählt ist, bestehend aus einem oder mehreren katalytischen Palladium-, Platin- und Rhodiumbestandteilen.

9. Katalytische Falle nach Anspruch 1, wobei das Trägerelement ein Kalium inertes Trägerelement umfasst.

10. Katalytische Falle nach Anspruch 1, wobei die erste Schicht ein erstes NOₓ-Sorptionsmittel umfasst, umfassend eine erste Kalium oxygenierte Verbindung und einen ersten katalytischen Bestandteil, und wobei die zweite Schicht ein zweites NOₓ-Sorptionsmittel umfasst, umfassend eine zweite Kalium oxygenierte Verbindung und einen zweiten katalytischen Bestandteil.

11. Katalytische Falle nach Anspruch 10, wobei der erste Bestandteil einen katalytischen Platinbestandteil und der zweite katalytische Bestandteil einen katalytischen Platinbestandteil, einen katalytischen Rhodiumbestandteil und einen katalytischen Palladiumbestandteil umfasst.

12. Katalytische Falle nach Anspruch 11, wobei (a) der erste katalytische Bestandteil einen katalytischen Platinbestandteil umfasst und die erste Schicht des Weiteren Lanthan-, Barium- und Zirkoniumbestandteile umfasst, und (b) der zweite katalytische Bestandteil einen katalytischen Platinbestandteil, einen katalytischen Palladiumbestandteil und einen katalytischen Rhodiumbestandteil umfasst, und die zweite Schicht des Weiteren Barium- und Zirkoniumbestandteile umfasst.

13. Katalytische Falle nach Anspruch 1 oder 2, wobei das NOₓ-Sorptionsmittel des Weiteren ein oder mehrere basische oxygenierte Verbindungen aus einem oder mehreren Metallen umfasst, gewählt aus der Gruppe bestehend aus (a) anderen Alkalimetallen als Lithium, Natrium und Kalium, (b) Erdalkalimetallen und (c) Metalle der Seltenenerden.

14. Katalytische Falle nach Anspruch 1 oder 2, wobei das NOₓ-Sorptionsmittel des Weiteren ein oder mehrere basische oxigenierte Verbindungen ein oder mehrere Metalle umfasst, gewählt aus der Gruppe bestehend aus Magnesium, Kalzium, Barium, Strontium und Cäsium.

15. Katalytische Falle nach Anspruch 1 oder 2, wobei der katalytische Bestandteil einen katalytischen Palladiumbestandteil umfasst, vorhanden in der Menge von 0,882 kg/m³ (25 g/ft³) Pd bis 10,586 kg/m³ (300 g/ft³) Pd.

16. Katalytische Falle nach Anspruch 1 oder 2, wobei das NOₓ-Sorptionsmittel in der Menge von zwischen 0,0061 bis 0,152 g/cm³ (0,1 bis 2,5 g/in³) vorhanden ist und wenigstens zwischen 0,0081 bis 0,091 g/cm³ (0,1 bis 1,5 g/in³) des NOₓ-Sorptionsmittels von einem oder mehreren basischen oxygenierten Verbindungen von Kalium bereitgestellt ist.

17. Katalytische Falle nach Anspruch 16, wobei der katalytische Bestandteil des Weiteren zwischen 0,882 kg/m³ (25 g/ft³) Pd bis 10,586 kg/m³ (300 g/ft³) Pd umfasst.

18. Katalytische Falle nach Anspruch 1 oder 2, wobei der katalytische Bestandteil wenigstens eines aus (a) einem katalytischen Platinbestandteil, vorhanden in der Menge von zwischen 0,0035 bis 3,176 kg/m³ (0,1 g/ft³ bis 90 g/ft³) Pd und (b) einem katalytischen Rhodiumbestandteil, vorhanden in einer Menge von 0,0035 bis 1,76a kg/m³ (0,1 g/ft³ bis 50 g/ft³) Rh umfasst.

19. Katalytische Falle nach Anspruch 1 oder 2, wobei der katalytische Bestandteil des Weiteren einen oder mehrere katalytische Bestandteile aus unedlem Metalloxid umfasst, gewählt aus der Gruppe bestehend aus Oxiden von einem oder mehreren aus Nickel, Mangan und Eisen.

20. Katalytische Falle nach Anspruch 3, wobei das NOₓ-Sorptionsmittel des Weiteren ein oder mehrere basische oxygenierte Verbindungen von Cäsium umfasst, abgeschieden in dem ersten Längssegment und ausgeschlossen aus dem zweiten Längssegment.

21. Katalytische Falle nach Anspruch 1, 2 oder 3, wobei der Abstand zwischen der vorderen Fläche des Trägers zu dem dazwischenliegenden Punkt zwischen 20% bis 80% der Länge des Trägers über seine Längsachse umfasst.

22. Katalytische Falle nach Anspruch 1, 2 oder 21, wobei das Trägerelement eine Vielzahl diskreter Trägerelementabschnitte umfasst, abgeschieden in einer Reihenflussverbindung entlang der Längsachse und wobei das erste Längssegment und das zweite Längssegment von den jeweiligen diskreten Trägerelementabschnitten umfasst sind.

23. Katalytische Falle nach Anspruch 1 oder 2 in Kombination mit einem Behandlungskatalysator angeordnet stromaufwärts der katalytischen Falle relativ zu dem Abgasstrom, wobei der Behandlungskatalysator wirksam ist, um die Oxidation von Kohlenwasserstoffen zu Co₂ und H₂O unter Oxidationsbedingungen zu beschleunigen.

24. Katalytische Falle nach Anspruch 1 oder 2, wobei das erste Längssegment zwischen der vorderen Fläche des Trägerelementes und dem dazwischenliegenden Punkt entlang der Längsachse angeordnet ist.

25. Katalytische Falle nach Anspruch 1 oder 2, wobei das erste Längssegment zwischen der hinteren Fläche des Trägerelementes und dem dazwischenliegenden Punkt entlang der Längsachse dessen angeordnet ist.

26. Verfahren zur Behandlung eines Abgasstromes enthaltend NOₓ, um den NOₓ-Gehalt des Stromes zu verringern, umfassend das Beibehalten des Stromes unter alternierenden Perioden mit (1) magerem und (2) stöchiometrischem oder fettem Betrieb und in-Kontakt-bringen des Stromes während der Perioden des mageren und stöchimetrischen oder fetten Betriebs mit dem katalytischen Fallenmaterial nach einem der Ansprüche 1 oder 2, bei Bedingungen, bei welchen wenigstens etwas des NOₓ in dem Abgasstrom von dem katalytischen Fallenmaterial während der Perioden des mageren Betriebs absorbiert wird und von dem katalytischen Fallenmaterial während der Perioden des stöchiometrischen oder fetten Betriebs freigegeben und zu Stickstoff reduziert wird.

27. Verfahren zur Behandlung eines Abgasstromes enthaltend NOₓ, um den NOₓ-Gehalt des Stromes zu verringern, umfassend das Beibehalten des Stromes unter alternierenden Bedingungen eines (1) mageren und (2) stöchiometrischen oder fetten Betriebs und in-Kontakt-Bringen des Stromes während der Perioden des mageren und stöchiometrischen oder fetten Betriebs mit dem katalytischen Fallenmaterial nach Anspruch 3, bei Bedingungen, bei welchen wenigstens ein Teil des NOₓ in dem Abgasstrom von dem katalytischen Fallenmaterial während der Perioden des mageren Betriebs absorbiert wird und von dem katalytischen Fallenmaterial während der Perioden stöchiometrischen oder fetten Betriebs freigegeben und zu Stickstoff reduziert wird.

28. Verfahren nach Anspruch 26 oder 27, wobei der Abgasstrom Kohlenwasserstoffe enthält und des Weiteren das in-Kontakt-bringen des Abgasstromes unter oxidierenden Bedingungen mit einem Katalysator umfasst, welcher wirksam ist, um die Oxidation von Kohlenwasserstoffen zu beschleunigen, wodurch die oxidierten Kohlenwasserstoffe darin enthalten sind, bevor der Abgasstrom mit der katalytischen Falle in Kontakt gebracht wird.

29. Verfahren nach Anspruch 26 oder 27, wobei die Temperatur des Abgasstromes unmittelbar vor dem in-Kontakt-bringen des katalytischen Fallenmaterials zwischen 250°C bis 800°C beträgt.

## Revendications

1. Piège catalytique destiné à la conversion de NOₓ dans un flux de gaz d'échappement qui alterne périodiquement entre (1) des conditions de pauvreté et (2) des conditions stoechiométriques ou de richesse, le piège catalytique étant sensiblement exempt de composants de silice et comprenant ;
(a) un matériau de piège catalytique qui est sensiblement exempt de composants de silice et qui comprend les composants suivants : (i) un support d'oxyde métallique réfractaire ayant, dispersé dessus, un composant catalytique permettant de promouvoir la réduction de NOₓ dans des conditions stoechiométriques ou de richesse du flux d'échappement, et (ii) un sorbant de NOₓ permettant d'absorber le NOₓ dans des conditions de pauvreté du flux de gaz d'échappement et de désorber le NOₓ dans des conditions stoechiométriques ou de richesse du flux de gaz d'échappement, le sorbant de NOₓ comprenant un ou plusieurs composté(s) oxygéné(s) basique(s) d'un métal alcalin choisi parmi le groupe consistant en du lithium, du sodium et du potassium, les autres composants du matériau de piège catalytique étant inertes par rapport auxdits composés oxygénés basiques ; et
(b) un élément de support réfractaire qui est inerte par rapport auxdits composés oxygénés basiques et sur lequel le matériau de piège catalytique est appliqué, et dans lequel l'élément de support possède un axe longitudinal, une face avant et une face arrière, et une pluralité de passages d'écoulement de gaz parallèles s'étendant longitudinalement à travers et reliant les faces avant et arrière de l'élément de support, les passages d'écoulement de gaz étant définis par des parois sur lesquelles le sorbant de NOₓ catalytique est appliqué, le sorbant de NOₓ étant disposé uniquement dans un premier segment longitudinal du piège catalytique défini entre l'une des faces avant et arrière de l'élément de support et un point intermédiaire le long de l'axe longitudinal de celui-ci, moyennant quoi un ou plusieurs composé(s) oxygéné(s) basique(s) d'un métal alcalin choisi parmi le groupe consistant en du lithium, du sodium et du potassium est/sont exclus d'un deuxième segment longitudinal du piège catalytique défini entre l'autre des faces avant et arrière de l'élément de support et ledit point intermédiaire, l'élément de support réfractaire étant choisi parmi le groupe consistant en un métal réfractaire, de l'alumine, de l'oxyde de titane, de la zircone, de l'alumine de zircone, de la zircone au dioxyde de titane, de l'alumine au dioxyde de titane, de l'alumine au lanthane, de l'oxyde de baryum-zircone-alumine, de l'alumine à l'oxyde de niobium, et de la cordiérite lessivée à la silice.

2. Piège catalytique selon la revendication 1, le piège catalytique comprenant :
(a) le matériau de piège catalytique comprenant (ii) le sorbant de NOₓ comprenant un ou plusieurs composé(s) oxygéné(s) basique(s) d'un métal alcalin choisi parmi le groupe consistant en du lithium, du sodium et du potassium présent(s) dans une quantité suffisante pour fournir, après réaction avec lesdits composés oxygénés basiques, au moins 0,0061 g/cm³ (0,1 g/in³), calculé comme M₂O, où M = Li, Na ou K.

3. Piège catalytique selon la revendication 1 ou la revendication 2, dans lequel le métal alcalin comprend du potassium.

4. Piège catalytique selon la revendication 3, dans lequel le composant catalytique est choisi parmi le groupe consistant en un ou plusieurs composant(s) catalytique(s) de palladium, de platine et de rhodium.

5. Piège catalytique selon la revendication 2, dans lequel les composants oxygénés basiques sont présents dans une quantité suffisante pour assurer un excédent de 0,0061 à 0,152 g/cm³ (0,1 à 2,5 g/in³) desdits composants oxygénés basiques.

6. Piège catalytique selon la revendication 5, dans lequel le composé de métal alcalin comprend du potassium.

7. Piège catalytique selon la revendication 1, dans lequel le métal réfractaire est choisi parmi le groupe consistant en de l'acier inoxydable, du Fecralloy et du titane.

8. Piège catalytique selon la revendication 1, dans lequel le composant catalytique est choisi parmi le groupe consistant en un ou plusieurs composant(s) catalytique(s) de palladium, de platine et de rhodium.

9. Piège catalytique selon la revendication 1, dans lequel l'élément de support comprend un élément de support inerte par rapport au potassium.

10. Piège catalytique selon la revendication 1, dans lequel la première couche comprend un premier sorbant de NOₓ comprenant un premier composé oxygéné de potassium et un premier composant catalytique, et la deuxième couche comprend un deuxième sorbant de NOₓ comprenant un deuxième composé oxygéné de potassium et un deuxième composant catalytique.

11. Piège catalytique selon la revendication 10, dans lequel le premier composant comprend un composant catalytique de platine et le deuxième composant catalytique comprend un composant catalytique de platine, un composant catalytique de rhodium et un composant catalytique de palladium.

12. Piège catalytique selon la revendication 11, dans lequel (a) le premier composant catalytique comprend un composant catalytique de platine et la première couche comprend en outre des composants de lanthane, de baryum et de zirconium, et (b) le deuxième composant catalytique comprend un composant catalytique de platine, un composant catalytique de palladium et un composant catalytique de rhodium, et la deuxième couche comprend en outre des composants de baryum et de zirconium.

13. Piège catalytique selon la revendication 1 ou la revendication 2, dans lequel le sorbant de NOₓ comprend en outre un ou plusieurs composé(s) oxygéné(s) basique(s) d'un ou plusieurs métal/métaux choisi(s) parmi le groupe consistant en (a) des métaux alcalins autres que le lithium, le sodium et le potassium, (b) des métaux alcalino-terreux, et (c) des métaux de terres rares.

14. Piège catalytique selon la revendication 1 ou la revendication 2, dans lequel le sorbant de NOₓ comprend en outre un ou plusieurs composé(s) oxygéné (5) basique(s) d'un ou plusieurs métal/métaux choisi(s) parmi le groupe consistant en du magnésium, du calcium, du baryum, du strontium et du césium.

15. Piège catalytique selon la revendication 1 ou la revendication 2, dans lequel le composant catalytique comprend un composant catalytique de palladium présent dans la quantité de 0,882 kg/cm³ (25 g/ft³) de Pd à 10,586 kg/m³ (300 g/ft³) de Pd.

16. Piège catalytique selon la revendication 1 ou la revendication 2, dans lequel le sorbant de NOₓ est présent dans la quantité de 0,0061 à 0,152 g/cm³ (0,1 à 2,5 g/in³), et au moins 0,0061 à 0,091 g/cm³ (0,1 à 1,5 g/in³) du sorbant de NOₓ est fourni par un ou plusieurs composé(s) oxygéné(s) basique(s) de potassium.

17. Piège catalytique selon la revendication 16, dans lequel le composant catalytique comprend en outre 0,882 kg/m³ (25 g/ft³) de Pd à 10,586 kg/m³ (300 g/ft³) de Pd.

18. Piège catalytique selon la revendication 1 ou la revendication 2, dans lequel le composant catalytique comprend au moins l'un parmi (a) un composant catalytique de platine présent dans la quantité de 0,0035 à 3,176 kg/m³ (0,1 g/ft³ à 90 g/ft³) de Pt, et (b) un composant catalytique de rhodium présent dans une quantité de 0,0035 à 1,764 kg/m³ (0,1 g/ft³ à 50 g/ft³) de Rh.

19. Piège catalytique selon la revendication 1 ou la revendication 2, dans lequel le composant catalytique comprend en outre un ou plusieurs composant(s) catalytique(s) d'oxyde métallique de base choisi (s) parmi le groupe consistant en des oxydes d'un ou plusieurs parmi le nickel, le manganèse et le fer.

20. Piège catalytique selon la revendication 3, dans lequel le sorbant de NOₓ comprend en outre un ou plusieurs composé(s) oxygéné(s) basique(s) de césium disposé(s) dans le premier segment longitudinal et exclus du deuxième segment longitudinal.

21. Piège catalytique selon la revendication 1, la revendication 2 ou la revendication 3, dans lequel la distance entre la face avant du support et le point intermédiaire comprend entre 20 pourcents et 80 pourcents de la longueur du support le long de son axe longitudinal.

22. Piège catalytique selon la revendication 1, la revendication 2 ou la revendication 21, dans lequel l'élément de support comprend une pluralité de sections d'élément de support discrètes agencées en communication de débit série le long de l'axe longitudinal, et le premier segment longitudinal et le deuxième segment longitudinal sont composés de sections d'élément de support discrètes respectives.

23. Piège catalytique selon la revendication 1 ou la revendication 2 en combinaison avec un catalyseur de traitement disposé en amont du piège catalytique par rapport au flux de gaz d'échappement, le catalyseur de traitement permettant au moins de promouvoir, dans des conditions d'oxydation, l'oxydation des hydrocarbures en CO₂ et H₂O.

24. Piège catalytique selon la revendication 1 ou la revendication 2, dans lequel le premier segment longitudinal est disposé entre la face avant de l'élément de support et le point intermédiaire le long de l'axe longitudinal de celui-ci.

25. Piège catalytique selon la revendication 1 ou la revendication 2, dans lequel le premier segment longitudinal est disposé entre la face arrière de l'élément de support et le point intermédiaire le long de l'axe longitudinal de celui-ci.

26. Procédé de traitement d'un flux de gaz d'échappement contenant du NOₓ afin de réduire la teneur en NOₓ du flux, comprenant le maintien du flux dans des périodes alternées d'opération de (1) pauvreté et (2) de stoechiométrie ou de richesse, et la mise en contact du flux pendant les périodes d'opération de pauvreté et de stoechiométrie ou de richesse avec le matériau de piège catalytique selon l'une quelconque de la revendication 1 ou de la revendication 2 dans des conditions dans lesquelles au moins une partie du NOₓ dans le flux de gaz d'échappement est absorbée par le matériau de piège catalytique pendant les périodes d'opération de pauvreté, et est libérée du matériau de piège catalytique et réduite en azote pendant les périodes d'opération de stoechiométrie ou de richesse.

27. Procédé de traitement d'un flux de gaz d'échappement contenant du NOₓ afin de réduire la teneur en NOₓ du flux, comprenant le maintien du flux dans des périodes alternées d'opération de (1) pauvreté et (2) de stoechiométrie ou de richesse, et la mise en contact du flux pendant les périodes d'opération de pauvreté et de stoechiométrie ou de richesse avec le matériau de piège catalytique de la revendication 3, dans des conditions dans lesquelles au moins une partie du NOₓ dans le flux de gaz d'échappement est absorbée par le matériau de piège catalytique pendant les périodes d'opération de pauvreté, et est libérée du matériau de piège catalytique et réduite en azote pendant les périodes d'opération de stoechiométrie ou de richesse.

28. Procédé selon la revendication 26 ou la revendication 27, dans lequel le flux de gaz d'échappement contient des hydrocarbures, et comprenant en outre la mise en contact du flux de gaz d'échappement, dans des conditions d'oxydation, avec un catalyseur permettant de promouvoir l'oxydation des hydrocarbures, afin d'oxyder les hydrocarbures contenus à l'intérieur, avant la mise en contact du flux de gaz d'échappement avec le piège catalytique.

29. Procédé selon la revendication 26 ou la revendication 27, dans lequel la température du flux de gaz d'échappement juste avant sa mise en contact avec le matériau de piège catalytique est de 250°C à 800°C.
